# EUROPEAN PATENT APPLICATION

(11) **EP 2 357 072 A1**
(43) Date of publication of application: **17.08.2011**
(21) Application number: 09826070.6
(22) Date of filing: 10.11.2009
(51) Int. Cl.: B29C 45/14, B29L 9/00, B29L 31/34

(54) **METHOD OF MANUFACTURING DECORATED MOLDED ELEMENT, AND DECORATED MOLDED ELEMENT**

(30) Priority: 13.11.2008 JP 2008290787; 12.12.2008 JP 2008317615
(71) Applicant: Polymatech Co., Ltd., Chuo-ku Tokyo 103-8424 (JP)
(72) Inventor: YAMAMOTO Youhei, Ishikawa-gun Fukushima 963-6312 (JP); TAKEYAMA Keita, Tokyo 114-0014 (JP)
(74) Representative: Schmid, Wolfgang
(86) International application number: PCT/JP2009/069089
(87) International publication number: WO 2010/055822

(57) **Abstract**

Provided is a technique for improving appearance of an outer surface of a decorative molded article and a technique in which a die that is easy in demolding can be used and which allows easy manufacture. A resin film (13) can be bent easily along surface edges of an outer surface (12a) in a resin molded article (12) and shapes of the surface edges in the outer surface (12a) of the resin molded article (12) can be formed accurately in accordance with the cavity of the die. With this, edges of the resin film (13) can be made less visually recognizable and a decorative molded article (11) with improved appearance can be manufactured. If the resin film (13) is three-dimensionally molded through pressure molding, the resin film (13) can be three-dimensionally shaped only with a male die (9). With this, the resin film (13) is demolded easily and die cost is reduced.

## Description

### Technical Field

The present invention relates to a method of manufacturing a decorative molded article and a decorative molded article which is used as an exterior component of various kinds of electronic equipment, such as mobile communication apparatuses, AV equipment, in-vehicle electric equipment and electric appliances.

### Background Art

Various kinds of electronic equipment, such as mobile communication apparatuses, AV equipment and in-vehicle electric equipment, is provided with various exterior components including housings and switches. These exterior components are provided with various "decorations" with characters, signs, numbers, patterns and so forth or provided with various designs including metal patterns and woodgrain patterns. An example of these exterior components is a decorative molded article in which a resin film provided with a decorative layer is attached to and integrated with a surface of a resin molded article; this decorative layer is, in many cases, previously formed on the resin film by printing, painting, transferring, vapor depositing and so forth.

For example, Japanese Unexamined Patent Application Publication No. 2000-330689 describes a key seat (i.e., a decorative molded article) in which a resin film provided with a metal-patterned decorative layer is attached to and integrated with a surface of a key top resin molded article through metal deposition (Patent Document 1). Japanese Unexamined Patent Application Publication No. 2008-030266 describes a casing component in which a resin film having a hairline-patterned decorative layer printed thereon is attached to and integrated with a surface of a housing (i.e., a resin molded article) (Patent Document 2). These decorative molded articles using resin films can provide wide decorative variations. Providing this decorative layer between the resin film and the resin molded article can increase durability of the decorative layer.

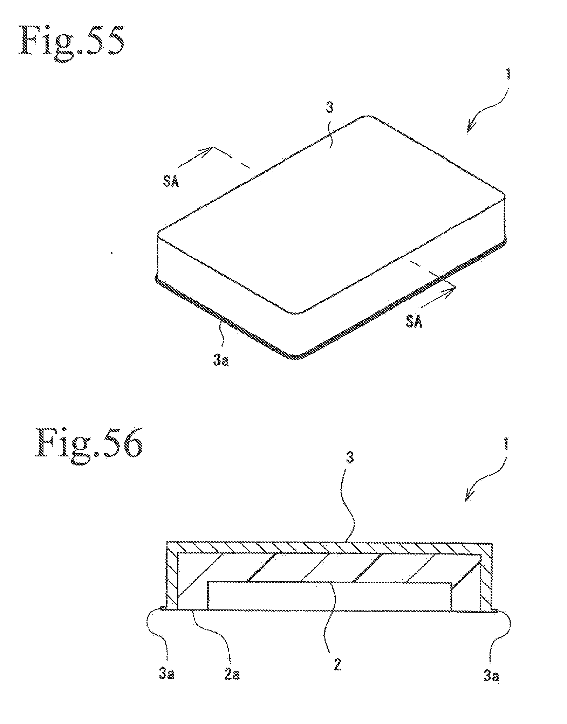

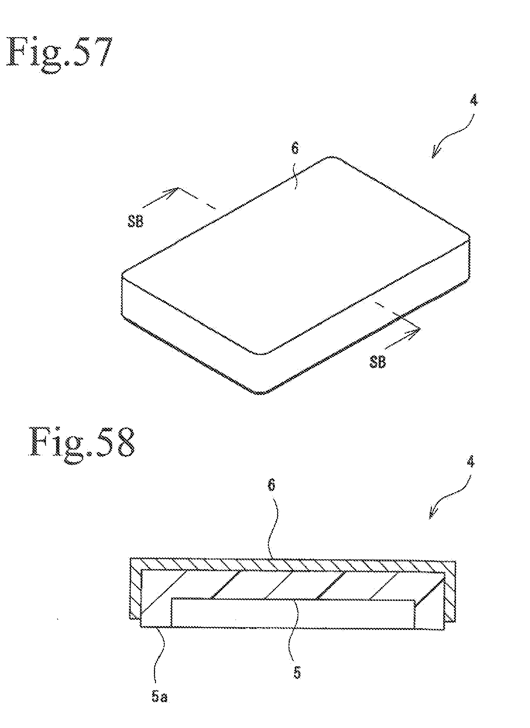

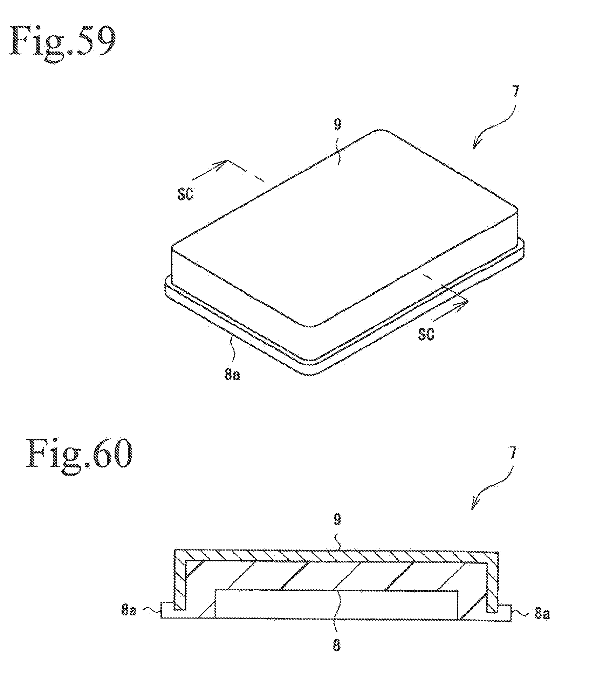

However, it is necessary to cover a visible outer surface of such a decorative molded article with a resin film; but it is not necessary to cover a non-visible inner surface with a resin film. It is therefore sufficient to cover only the visible portion with a resin film; but it is difficult to accurately align an edge of the resin film with a boundary between the outer surface and the inner surface. For example, in a decorative molded article 1 illustrated in Figs. 55 and 56, a resin molded article 2 except for a bottom surface 2a is covered with a resin film 3 to form an outer surface. This decorative molded article 1 is formed by cutting an unnecessary portion of the resin film 3 with a blanking punch after the integrating resin molded article 2 and the resin film 3 are integrated with each other; however, a burr 3a of the resin film 3 remains projecting from an edge of the resin molded article 2. A decorative molded article 4 illustrated in Figs. 57 and 58 is formed by integrating a resin molded article 5 and a cut resin film 6; but an edge of the resin film 6 is retracted from an edge of the resin molded article 5. Both of these examples are unfavorable in appearance, and there is a possibility of gradual stripping of the edges of the resin films 3 and 6 from the resin molded articles 2 and 5. In addition, a decorative molded article 7 illustrated in Figs. 59 and 60 is formed by integrating resin molded article 8 and a resin film 9 so that cut edges of the resin film 9 are concealed by an outwardly-extending circular flange 8a of the resin molded article 8; however, since an entire outer surface of the resin molded article 8 cannot be covered with the resin film 9, end portions of the resin molded article 8 are not fully decorated. In addition, the edges of the resin film 9 often deform irregularly and, as a result, the resin film 9 is partially exposed to a surface of the flange 8a.

Japanese Unexamined Patent Application Publication No. 2001-347538 discloses a technique for covering an end surface of a molded article with a film (Patent Document 3). Such a technique can be considered to solve those problems described above; but the technique disclosed in Japanese Unexamined Patent Application Publication No. 2001-347538 requires a special die provided with, for example, a sliding mechanism to allow demolding of a molded resin film in a molding process of the resin film. This is because the molded resin film has an undercut configuration which makes it impossible to demold the resin film by merely opening the die. Further, creases due to wrinkles are often formed in a sheet at an end surface which is bent inward from a side wall.

### Citation List

### Patent Literature

PTL 1: Japanese Unexamined Patent Application Publication No. 2000-330689
PTL 2: Japanese Unexamined Patent Application Publication No. 2008-030266
PTL 3: Japanese Unexamined Patent Application Publication No. 2001-347538

### Summary of Invention

### Technical Problem

It is the present invention that has been completed in view of the aforementioned related art circumstances. That is, an object of the present invention is to provide a technique for improving appearance of an outer surface of a decorative molded article.
It is also an object of the present invention to provide a technique in which a die that is easy in demolding can be used and which allows easy manufacture.
A further object of the present invention is to provide a technique in which creases are not easily formed.

### Solution to Problem

In order to achieve the aforementioned objects, the present invention is constituted as follows.
The present invention provides a method of manufacturing a decorative molded article which includes a visible outer surface and a non-visible inner surface and in which the outer surface is at least partially decorated with a resin film, in which the following processes are performed: a process in which a margin extending from the outer surface toward the inner surface is provided in the resin film; an insertion process in which the resin film is inserted in a die which constitutes a part of a cavity for molding a resin molded article; and an integration process in which clamping is performed with a die which constitutes another part of the cavity for forming the resin molded article and the margin is integrated with the resin molded article on an inner surface side as the resin molded article is molded and integrated with the resin film.

Since the margin extending from the outer surface toward the inner surface is provided in the resin film, an end portion of the outer surface which is the boundary between the outer surface and the inner surface can be reliably covered with the resin film and thus the decorative molded article with improved appearance can be formed.
In addition, the integration process in which the margin is integrated with the resin molded article on the inner surface side as the resin molded article is molded and integrated with the resin film is provided. With this, a decorative molded article made by a resin molded article of which surface is covered with a resin film that is easily decorated can be obtained and the margin can be reliably integrated with the resin molded article.

Note that the visible outer surface is a surface which is visible and is to be decorated and the non-visible inner surface is a surface which is hidden and is normally not visually recognized. Therefore, the decorative molded article as an object of the present invention usually has a configuration in which the outer surface is covered with the resin film and the inner surface is not covered with the resin film. However, the present invention does not eliminate providing the resin film on the inner surface; one of the features of the present invention is providing the resin film also in a part of the inner surface. Similarly, it is not necessary that the entire outer surface is covered with the resin film; a configuration in which only a part of the outer surface is covered with the resin film from the viewpoint of, for example, the design is also included in the range of the present invention.

In the method of manufacturing the decorative molded article in the present invention, the following methods are provided to form the margin highly accurately and easily.
The method may include a bending line formation process in which a bending line is provided at a boundary between the outer surface and the margin is performed before the insertion process, and the integration process includes a process in which the margin of the resin film is pressed in with a die which constitutes a part of another cavity and is bent along the bending line. With this, since the bending line is provided at the boundary between the outer surface and the margin, the resin film can be bent easily along the portion of the bending line, and thus the end portion of the outer surface which is the boundary between the outer surface and the inner surface can be deformed with high dimensional accuracy. In order to make the bending of the resin film easy, such a bending line may be a top portion at which the resin film is bent or a portion which is thinner than the peripheral portions so that the margin is bent on a back side (i.e., an inner side) of the resin film with respect to the outer surface. When the bending line is the top portion at which the resin film is bent, a bending angle may be formed in the margin as described later. When the bending line is the portion which is thinner than the peripheral portions, the thinned portion may be formed as a continuous line as well as a non-continuous line such as a dotted line, a dashed line and a chain line.

In the bending line formation process, it is preferred to temporarily mold the resin film into a shape corresponding to the resin molded article. Since the resin film is temporarily molded into a shape corresponding to the resin molded article, three-dimensional formation of the resin film and formation of the margin and the bending line can be performed simultaneously. With this, the resin film is easily inserted in the die for forming the resin molded article and the bending line of the resin film is easily aligned with the surface edges of the outer surface in the resin molded article.
The bending line is preferably a top portion at which the resin film is bent such that the margin is bent on the back side of the resin film from the outer surface. This is because the resin film can be bent easily in alignment with the surface edge of the outer surface of the resin molded article by providing the bending line at which the margin is bent. It is also because the margin can be pressed in and bent in a desired direction with the die in a subsequent clamping process and thus the end portion of the outer surface can be formed accurately in accordance with a cavity of the die with high dimensional accuracy.

An insertion process is provided in which the resin film is inserted in a die which constitutes a part of the cavity for molding the resin molded article with at least a part of the margin protruding from the die. Since such an insertion process is provided, the margin can be pressed in with the die to be bent along the bending line in the subsequent integration process. Since it is not necessary to place the margin along the die in which the margin is inserted, when the margin is bent, the resin film can be accurately inserted in the die irrespective of the extent of the bending. With this, it is not necessary to strictly control the extent of the bending of margin and the extent of the bending of the margin may be provided with an increased degree of freedom. In addition, a design of a shape of the boundary portion of the outer surface and the inner surface can be changed easily.

A process in which the margin of the resin film is pressed in and bent along the bending line with the die which constitutes another part of the cavity which forms the resin molded article is provided. Since such a bending process of the margin is provided, even if an angle between the outer surface and the inner surface of a product is a sharp acute angle of, for example, 30 degrees or less, the angle can be formed as an acute angle of 60 degrees or more, a right angle or an obtuse angle at the temporary molding state. It is necessary to use a die provided with a special mechanism, such as a sliding mechanism, for processing an undercut configuration because the resin film is not easily demolded when being taken out of a temporary molding die of resin film when the angle is a sharp acute angle of 30 degrees or less at the temporary molding stage. However, if the angle is an acute angle of 60 degrees or more, a right angle or an obtuse angle, it is not necessary to use such a special temporary molding die. With this, the manufacture of the product is simplified and a less costly product can be obtained.
It is therefore preferable that the bending angle, formed in the bending line formation process, of the margin along the bending line is more than 90 degrees and less than 180 degrees between the outer surface side and the margin.

In the integration process in which the margin is bent along the bending line, a contact angle between the die which constitutes a part of the cavity and an end of the margin when they are brought into contact may be more than 0 degrees and 85 degrees or less with respect to a cavity surface of the die. Since the angle of the margin with respect to the cavity surface of the die is more than 0 degrees and 85 degrees or less, the margin can be reliably bent inward on the inner surface side when being brought into contact with the die.
Since the integration process in which the margin is integrated with the resin molded article on the inner surface side as the resin molded article is molded and integrated with the resin film is provided, a decorative molded article made by a resin molded article of which surface is covered with a resin film that is easily decorated can be obtained and the margin can be reliably integrated with the resin molded article.
According to such a method of manufacturing, if a plurality of margins are formed in and cut out of a large-sized sheet-like resin film, the margins can be divided into individual pieces and thus mass production of the resin film can be achieved. Thus, the manufacturing cost can be reduced and a less costly decorative molded article can be obtained.

When the die which constitutes a part of the cavity and a die which constitutes another cavity are clamped together in the integration process, the outer surface side of the resin film may be positioned along the die which constitutes a part of the cavity across the bending line, and the margin which constitutes the inner surface side of the resin film may be positioned along the die which constitutes another part of the cavity across the bending line.
When the resin film is thus disposed with respect to the die, the outer surface and a portion of the inner surface adjacent to the outer surface of the resin molded article can be covered with the resin film, and thus the resin molded article with improved appearance can be obtained. Since the margin can be exposed to the inner surface, if the decorative molded article is constituted by an upper case and a lower case and is, for example, a component in which the upper case and the lower case are combined, the inner surfaces to which the resin film is exposed may overlap each other and thus highly accurate combination parts with no gaps nor burrs in overlapping areas can be achieved.

A cylindrical through hole which is directed inside the resin molded article may be provided in the resin film and the margin may be provided at an end of the through hole. Since the cylindrical through hole which is directed inside the resin molded article is provided in the resin film and the margin is provided at an end of the through hole, a decorative molded article with improved appearance also at the portion of the through hole of the decorative molded article can be obtained.

The bending line of the resin film may be formed through pressure molding. If a complicated three-dimensional shape is to be molded from the resin film through compression molding, it is necessary to prepare a male die and a female die corresponding to the complicated three-dimensional shape and to provide the die with a sliding mechanism. In the pressure molding, however, it is only necessary to prepare either of the male die or the female die, and thus the die cost can be reduced as compared with the compression molding. In the process in which the resin film is temporarily molded, time per 1 cycle can be reduced, mass productivity can be improved and less costly decorative molded article can be obtained.

In the method of manufacturing the decorative molded article in the present invention, the following methods are provided to form the margin with improved appearance.
A notch formation process in which notches for dividing the margin into a plurality of sections may be performed before the insertion process. Since the notches for dividing the margin into a plurality of sections are provided in this manner, wrinkles can be less easily formed and thus creases can be less easily formed in the margin.

Regarding the method of manufacturing the decorative molded article in which the notches are provided, the resin film can be inserted with at least a part of the margin protruding from the die which constitutes a part of the cavity for molding the resin molded article in the insertion process. With this, since the margin can be pressed in and bent with the die in the integration process after the insertion process, creases can be less easily formed. Since it is not necessary to place the margin along the die in which the margin is inserted, when the margin is bent, the resin film can be accurately inserted in the die irrespective of the extent of the bending. With this, it is not necessary to strictly control the extent of the bending of margin and the extent of the bending of the margin may be provided with an increased degree of freedom. In addition, a design of a shape of the boundary portion of the outer surface and the inner surface can be changed easily.

Regarding the method of manufacturing the decorative molded article in which the notches are provided, a temporary molding process in which the resin film is formed into a shape corresponding to the resin molded article may be performed before the notch formation process. Since it is difficult to control stretching of the resin film in the temporary molding process with high accuracy, alignment of the notches becomes difficult if the resin film having notches formed therein is deformed. However, if the temporary molding process is performed before the notch formation process, no displacement of the notches in the resin film occurs and thus the notches can be less easily exposed to the outer surface. With this, the decorative molded article with improved appearance can be formed. If temporary molding is performed for resin films equivalent to a plurality of resin films out of a large-sized resin film and the temporarily-molded resin films are divided into individual pieces, the decorative molded article can be mass produced with reduced manufacturing cost and thus less costly decorative molded article can be obtained. Thus, formation of creases can be prevented.

Regarding the method of manufacturing the decorative molded article in which the notches are provided, a bending line formation process in which the bending line is provided at the boundary between the outer surface of the resin film and the margin can be performed before the notch formation process. If the bending line is formed in the resin film, the resin film can be bent along the portion of the bending line, and thus the end portions of the outer surface which is the boundary between the outer surface and the inner surface can be deformed with high dimensional accuracy. In addition, if the notches are provided after the bending line is formed in the resin film, misalignment of the notches occur less easily and thus the notches can be less easily exposed to the outer surface. Thus, formation of creases can be prevented.

Regarding the method of manufacturing the decorative molded article in which the notches are provided, about the formation of the bending line, a bending angle of the margin along the bending line angle between an outer surface side and the margin may be more than 90 degrees and less than 180 degrees. When the bending angle is formed in the bending line of the resin film, a die, a jig, and so forth are used. However, if the bending angle is an acute angle of 90 degrees or less, the resin film cannot be easily taken out; it is therefore necessary to use a die provided with a special mechanism, such as a sliding mechanism, for processing an undercut configuration. If, however, the bending angle of the margin along the bending line between the outer surface side and the margin is more than 90 degrees and less than 180 degrees, it is not necessary to provide the die with a special mechanism; thus the manufacture of the decorative molded article 61 is simplified and a less costly decorative molded article can be obtained. In addition, formation of creases can be prevented.

Regarding the method of manufacturing the decorative molded article in which the notches are provided, about the integration process, a contact angle between the die which constitutes a part of the cavity and an end of the margin when they are brought into contact may be more than 0 degrees and 85 degrees or less with respect to a cavity surface of the die. With this, the margin can be reliably bent inward on the inner surface side when it is brought into contact with another die at the time of clamping for forming the resin molded article. In addition, formation of creases can be prevented.

Regarding the method of manufacturing the decorative molded article in which the notches are provided, when the die which constitutes a part of the cavity and a die which constitutes another cavity are clamped together about the integration process, the outer surface side of the resin film may be positioned along the die which constitutes a part of the cavity and the margin which constitutes the inner surface side of the resin film may be positioned along the die which constitutes another part of the cavity. When the resin film is thus disposed with respect to the die, the outer molded surface and a portion of the inner molded surface adjacent to the outer molded surface of the resin molded article can be covered with the resin film, and thus the decorative molded article with improved appearance can be obtained. Since the margin can be exposed to the inner surface, if the decorative molded article is constituted by an upper case and a lower case and is, for example, a component in which the upper case and the lower case are combined, the inner surfaces to which the resin film is exposed may overlap each other and thus highly accurate combination parts with no gaps nor burrs in overlapping areas can be achieved. In addition, formation of creases can be prevented.

Regarding the method of manufacturing the decorative molded article in which the notches are provided, a process in which the bending line is provided in resin film at the boundary between the outer surface and the margin can be included in the temporary molding process. In this manner, three-dimensional formation of the resin film and formation of the margin and the bending line can be performed simultaneously. With this, the resin film is easily inserted in the die for forming the resin molded article and the bending line of the resin film is easily aligned with the surface edges of the outer molded surface in the resin molded article.

Regarding the method of manufacturing the decorative molded article in which the notches are provided, the temporary molding process of the resin film may be performed through pressure molding. If a complicated three-dimensional shape is to be molded from the resin film through compression molding, it is necessary to prepare a male die and a female die corresponding to the complicated three-dimensional shape and to provide the die with a sliding mechanism. In the pressure molding, however, it is only necessary to prepare either of the male die or the female die, and thus the die cost can be reduced as compared with the compression molding. If the resin film is temporarily molded through pressure molding, time per 1 cycle can be reduced, mass productivity can be improved and less costly decorative molded article can be obtained.

Regarding the method of manufacturing the decorative molded article in which the notches are provided, the bending line formation process may be performed after the notch formation process. When the bending line is provided in the resin film, creases may be formed in the margin. However, if the bending line formation process is performed after the notch formation process, wrinkles can be less easily formed and thus creases can be less easily formed in the margin. If the bending angle is formed along the bending line, the resin film can be demolded easily.

Further, the present invention provides a decorative molded article which includes a visible outer surface and a non-visible inner surface and in which the outer surface is at least partially decorated with a resin film, in which the resin film includes a margin which extends from an outer surface toward an inner surface and a part of the inner surface is covered with the margin.
Since the resin film includes a margin which extends from an outer surface toward an inner surface and a part of the inner surface is covered with the margin, a decorative molded article with improved appearance has been achieved.

There are two typical configurations in the decorative molded article of the present invention.
In the first configuration, the margin may be provided on the entire portion from a boundary between the outer surface and the inner surface to the inner surface. That is, since the margin is provided in the entire portion adjacent to the outer surface, the appearance at the portion of the inner surface in contact with the outer surface can be improved.

Regarding the first configuration of the decorative molded article, a surface of the margin may form a surface which is substantially flush with the inner surface. Since the surface of the margin forms a surface substantially flush with the inner surface, the margin can be exposed to the inner surface. That is, if the decorative molded article is constituted by an upper case and a lower case and is used as, for example, a component in which the upper case and the lower case are combined, the inner surfaces to which the resin film is exposed may form overlapping areas and thus highly accurate combination parts with no gaps nor burrs in the overlapping areas can be achieved.
Alternatively, the surface of the margin may be embedded in the inner surface. Since the surface of the margin is embedded in the inner surface, the margin can be hidden inside the resin molded article and thus adhesive force between the resin film and the resin molded article can be enhanced.

The first configuration of the decorative molded article may include a through hole which penetrates the thickness of the decorative molded article and the margin may be provided at an end of the through hole. Since such a margin is provided, even if the through hole is visually recognized on the outer surface also in a resin molded article which has a through hole, inside of the through hole can be decorated to have improved appearance.

The first configuration of the decorative molded article may further include partially overlapping sections of the margin. That is, the sections of the margin may be overlapped on the bottom surface of the resin molded article. With this, it is not necessity to cut the margin off in accordance with the shape of the resin molded article; thus a decorative molded article with improved appearance can be achieved. For example, if an outer surface of a resin molded article which is in a rectangular shape when seen in a plan view is covered with a resin film, a section of the margin extending along a longitudinal side and a section of the margin extending along a width side can be overlapped at a corner between the longitudinal side and the width side on the bottom surface of the resin molded article.

In the second configuration of the decorative molded surface, the margin is divided into a plurality of sections by notches. With this, wrinkles can be less easily formed when the margin is bent and thus creases can be less easily formed in the margin.

Regarding the second configuration of the decorative molded article, the sections of the margin divided by the notches can be laminated each other. With this, wrinkles can be less easily formed and thus creases can be less easily formed in the margin. For example, if an outer molded surface of a resin molded article which is in a rectangular shape when seen in a plan view is covered with a resin film, a section of the margin extending along a longitudinal side and a section of the margin extending along a width side can be laminated each other at a corner between the longitudinal side and the width side on the bottom surface of the resin molded article.

Regarding the second configuration of the decorative molded article, the margin can be provided in the entire portion from the boundary between the outer surface and the inner surface to the inner surface. That is, since the margin is provided in the entire portion adjacent to the outer surface, the appearance at the portion of the inner surface in contact with the outer surface can be improved. In addition, creases are less easily formed in the decorative molded article.

Regarding the second configuration of the decorative molded article, a surface of the margin may form a surface which is substantially flush with the inner surface. If the surface of the margin is a surface substantially flush with the inner surface, the margin can be exposed to the inner surface. That is, if the decorative molded article is constituted by an upper case and a lower case and is used as, for example, a component in which the upper case and the lower case are combined, the inner surfaces to which the resin film is exposed may form overlapping areas and thus highly accurate combination parts with no gaps nor burrs in the overlapping areas can be achieved. In addition, creases are less easily formed in the decorative molded article and thus appearance is improved in the decorative molded article.

### Advantageous Effects of Invention

In the method of manufacturing a decorative molded article and the decorative molded article of the present invention, the resin film can be bent easily along the surface edge of the outer surface in the resin molded article and the shape of the surface edge in the outer surface of the resin molded article can be formed accurately in accordance with the cavity of the die. In addition, the outer surface of the decorative molded article can be reliably covered with the resin film and thus the decorative molded article with improved appearance can be manufactured.
It is not necessary to use a complicated die or a complicated manufacturing process; thus the decorative molded article can be manufactured easily and the manufacturing cost can be reduced.
By providing notches for dividing the margin into a plurality of sections, wrinkles are less easily formed and thus creases are less easily formed in the margin.

### Brief Description of Drawings

[Fig. 1] Fig. 1(A) is a perspective view illustrating a decorative molded article of a first embodiment and Fig. 1(B) is a sectional view along the line SD-SD of Fig. 1(A).
[Fig. 2] Fig. 2 is a bottom view of the decorative molded article illustrated in Fig. 1.
[Fig. 3] Fig. 3 is a sectional view, corresponding to Fig. 1(B), of combination parts in which the decorative molded article of Fig. 1 is combined with another decorative molded article.
[Fig. 4] Fig. 4 is an explanatory view of a manufacturing process of the decorative molded article of the first embodiment illustrating a heating process of a resin film.
[Fig. 5] Fig. 5 is an explanatory view of the manufacturing process of the decorative molded article of the first embodiment illustrating a pressure forming process of the resin film.
[Fig. 6] Fig. 6 is an explanatory view of the manufacturing process of the decorative molded article of the first embodiment illustrating a cutting-off process of the resin film.
[Fig. 7] Fig. 7 is an explanatory view of the manufacturing process of the decorative molded article of the first embodiment illustrating a state in which the resin film is inserted in a female die.
[Fig. 8] Fig. 8 is an explanatory view of the manufacturing process of the decorative molded article of the first embodiment illustrating a state in which the female die and a positive die are clamped together.
[Fig. 9] Fig. 9 is an explanatory view of the manufacturing process of the decorative molded article of the first embodiment illustrating a state in which the female die and the positive die are separated from each other.
[Fig. 10] Fig. 10 is an explanatory view of the manufacturing process corresponding to Fig. 7 illustrating a method of manufacturing a decorative molded article which is a first modification of the first embodiment.
[Fig. 11] Fig. 11 is a sectional view, corresponding to Fig. 2, of a decorative molded article which is a second modification of the first embodiment.
[Fig. 12] Fig. 12 is a sectional view, corresponding to Fig. 2, of a decorative molded article which is a third modification of the first embodiment.
[Fig. 13] Fig. 13 is a perspective view of a decorative molded article which is a fourth modification of the first embodiment.
[Fig. 14] Fig. 14 is a bottom view of the decorative molded article of Fig. 13.
[Fig. 15] Fig. 15 is a perspective view illustrating a decorative molded article of a second embodiment.
[Fig. 16] Fig. 16 is a bottom view of the decorative molded article illustrated in Fig. 15.
[Fig. 17] Fig. 17 is a sectional view along the line SE-SE of Fig. 15.
[Fig. 18] Fig. 18 is an explanatory view of a manufacturing process corresponding to Fig. 5 illustrating a manufacturing process of the decorative molded article of the second embodiment.
[Fig. 19] Fig. 19 is an explanatory view of the manufacturing process corresponding to Fig. 6 illustrating the manufacturing process of the decorative molded article of the second embodiment.
[Fig. 20] Fig. 20 is an explanatory view of the manufacturing process corresponding to Fig. 7 illustrating the manufacturing process of the decorative molded article of the second embodiment.
[Fig. 21] Fig. 21 is an explanatory view of the manufacturing process of the decorative molded article of the second embodiment illustrating, as a sectional view of a portion provided with through holes, a state in which a female die and a positive die are clamped together.
[Fig. 22] Fig. 22 is an explanatory view of the manufacturing process of the decorative molded article of the second embodiment illustrating, as a sectional view of the portion provided with through holes, a state in which the female die and the positive die are separated from each other.
[Fig. 23] Fig. 23 is an explanatory view of a manufacturing process corresponding to Fig. 5 illustrating a manufacturing process of a decorative molded article of a third embodiment.
[Fig. 24] Fig. 24 is a perspective view illustrating a decorative molded article of a fourth embodiment.
[Fig. 25] Fig. 25 is a sectional view along the line SF-SF of Fig. 24.
[Fig. 26] Fig. 26 is a bottom view of the decorative molded article illustrated in Fig. 24.
[Fig. 27] Fig. 27 is a sectional view of the decorative molded article of the fourth embodiment combined with another decorative molded article.
[Fig. 28] Fig. 28 is an explanatory view of a manufacturing process illustrating a heating process of a resin film in the decorative molded article of the fourth embodiment.
[Fig. 29] Fig. 29 is an explanatory view of the manufacturing process illustrating a pressure forming process of the resin film in the decorative molded article of the fourth embodiment.
[Fig. 30] Fig. 30(A) is an explanatory view of the manufacturing process illustrating a cutting-off process of the resin film in the decorative molded article of the fourth embodiment and Fig. 30(B) is a bottom view illustrating the resin film after the cutting-off process of Fig. 30(A).
[Fig. 31] Fig. 31 is a bottom view illustrating the resin film in the decorative molded article of the fourth embodiment after a notch formation process.
[Fig. 32] Fig. 32 is an explanatory view of the manufacturing process illustrating a state in which the resin film in the decorative molded article of the fourth embodiment is inserted in a female die.
[Fig. 33] Fig. 33 is an explanatory view of the manufacturing process illustrating a state in which the female die in the decorative molded article of the fourth embodiment is clamped.
[Fig. 34] Fig. 34 is an explanatory view of the manufacturing process illustrating a state in which the female die in the decorative molded article of the fourth embodiment is opened.
[Fig. 35] Fig. 35 is a sectional view along the line SG-SG of Fig. 36.
[Fig. 36] Fig. 36 is a bottom view illustrating a decorative molded article of a fifth embodiment.
[Fig. 37] Fig. 37 is an explanatory view of a manufacturing process illustrating a pressure forming process of a resin film in the decorative molded article of the fifth embodiment.
[Fig. 38] Fig. 38 is an explanatory view of the manufacturing process illustrating a cutting-off process of the resin film in the decorative molded article of the fifth embodiment.
[Fig. 39] Fig. 39 is a sectional view illustrating the resin film in the decorative molded article of the fifth embodiment after the notch formation process.
[Fig. 40] Fig. 40 is an explanatory view of the manufacturing process illustrating a state in which the resin film in the decorative molded article of the fifth embodiment in inserted in a female die.
[Fig. 41] Fig. 41 is an explanatory view of the manufacturing process illustrating a state in which the female die in the decorative molded article of the fifth embodiment is clamped.
[Fig. 42] Fig. 42 is an explanatory view of the manufacturing process illustrating a state in which the female die in the decorative molded article of the fifth embodiment is opened.
[Fig. 43] Fig. 43 is an explanatory view of a manufacturing process, corresponding to Fig. 40, for manufacturing a modification of the decorative molded article of the fifth embodiment.
[Fig. 44] Fig. 44 is an explanatory view of a manufacturing process illustrating a pressure forming process of a resin film in a first modification of the method of manufacturing the decorative molded article of the fifth embodiment.
[Fig. 45] Fig. 45 is an explanatory view of a manufacturing process illustrating a pressure forming process of a resin film in a second modification of the method of manufacturing the decorative molded article of the fifth embodiment.
[Fig. 46] Fig. 46 is an explanatory view of the manufacturing process illustrating a cutting-off process of the resin film in the second modification of the method of manufacturing the decorative molded article of the fifth embodiment.
[Fig. 47] Fig. 47 is a sectional view illustrating the resin film in the second modification of the method of manufacturing the decorative molded article of the fifth embodiment after the notch formation process.
[Fig. 48] Fig. 48 is an explanatory view of the manufacturing process illustrating a bending line formation process of the resin film in the second modification of the method of manufacturing the decorative molded article of the fifth embodiment.
[Fig. 49] Fig. 49 is a bottom view illustrating a first modification common to the decorative molded articles of the fourth and fifth embodiments.
[Fig. 50] Fig. 50 is a bottom view illustrating a second modification common to the decorative molded articles of the fourth and fifth embodiments.
[Fig. 51] Fig. 51 is a bottom view illustrating a third modification common to the decorative molded articles of the fourth and fifth embodiments.
[Fig. 52] Fig. 52 is a bottom view illustrating a fourth modification common to the decorative molded articles of the fourth and fifth embodiments.
[Fig. 53] Fig. 53 is a bottom view illustrating a fifth modification common to the decorative molded articles of the fourth and fifth embodiments.
[Fig. 54] Fig. 54 is a bottom view illustrating a sixth modification common to the decorative molded articles of the fourth and fifth embodiments.
[Fig. 55] Fig. 55 is a perspective view illustrating a related art decorative molded article.
[Fig. 56] Fig. 56 is a sectional view along the line SA-SA of Fig. 55.
[Fig. 57] Fig. 57 is a perspective view illustrating another related art decorative molded article.
[Fig. 58] Fig. 58 is a sectional view along the line SB-SB of Fig. 57.
[Fig. 59] Fig. 59 is a perspective view illustrating still another related art decorative molded article.
[Fig. 60] Fig. 60 is a sectional view along the line SC-SC of Fig. 59.

### Description of Embodiments

Hereinafter, embodiments of the present invention will be described with reference to the drawings. Note that components common to the embodiments are denoted by the same reference numerals and repeated description will be omitted.
In each embodiment, an example will be described in which the present invention is applied to an upper case of a small remote controller constituted by upper and lower cases; however, the present invention is also applicable to other decorative components and functional components.

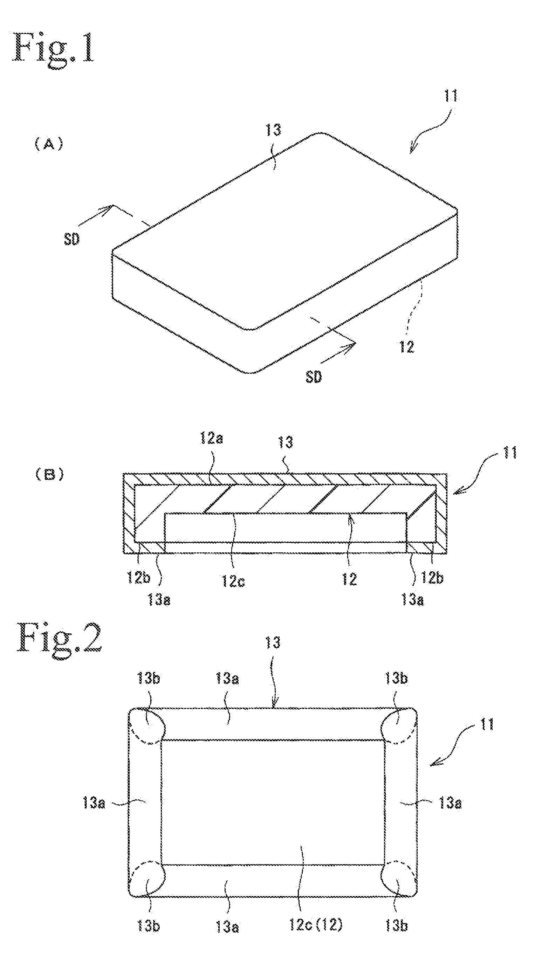

### First Embodiment [Figs. 1 to 9]:

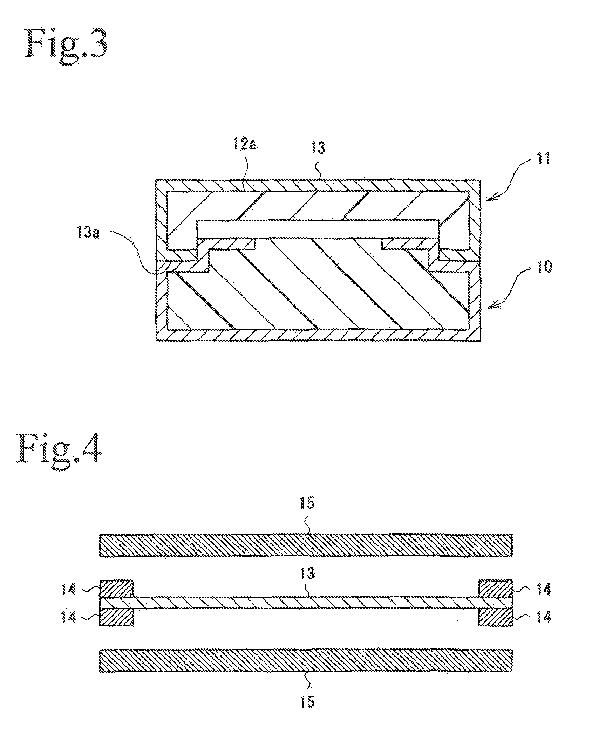

A decorative molded article 11 of a first embodiment is illustrated in Figs. 1 to 9. Fig. 1 (A) is a perspective view of the decorative molded article 11; Fig. 1(B) is a sectional view of the decorative molded article 11 along the line SD-SD; Fig. 2 is a bottom view of the decorative molded article 11; and Figs. 4 to 9 are explanatory views illustrating a method of manufacturing the decorative molded article 11. The decorative molded article 11 of the present embodiment is provided with a resin molded article 12 and a resin film 13 which includes a decorative layer.
This decorative molded article 11 is an upper case as described above which forms combination parts in combination with a lower case 10 made by another decorative molded article as illustrated in Fig. 3.

The resin molded article 12 is formed in a rectangular shape with a cavity defined therein. The resin molded article 12 has an outer surface 12a and a non-visible inner surface. The outer surface 12a is visible through the resin film 13. The inner surface has a bottom surface 12b, which is in contact with the lower case, and an inner molded surface 12c inside the cavity.

The resin film 13 covers the outer surface 12a of the resin molded article 12 and decorates the resin molded article 12 with an unillustrated decorative layer formed on a back surface thereof. The resin film 13 is bent and extends from the outer surface 12a of the resin molded article 12 toward the bottom surface 12b of the resin molded article 12. A portion of the resin film 13 covering the bottom surface 12b is formed as a margin 13a. The margin 13a is provided as a portion of the resin film 13 extending toward the inner surface from an end portion (i.e., a surface end) of the outer surface 12a which is a boundary between the outer surface 12a and the bottom surface 12b; thus the margin 13a overcomes the problem of unfavorable appearance at a boundary between visible portions and non-visible portions of the decorative molded article 11. Overlapping areas 13b of the margin 13a where the margin 13a partially overlaps are formed at corners of the bottom surface 12b.

If the resin molded article 12 must be rigid enough not to deform easily, the resin molded article 12 may be made of thermoplastic resin and thermosetting resin. Examples of thermoplastic resin include polyethylene (PE) resin, polypropylene (PP) resin, polystyrene (PS) resin, polycarbonate (PC) resin, polyethylene terephthalate (PET) resin, polybutylene terephthalate (PBT) resin, polymethyl methacrylate (PMMA) resin, polyamide (PA) resin, polyurethane (PU) resin and acrylonitrile-butadiene-styrene copolymer (ABS) resin. Examples of thermosetting resin include epoxy resin (EP) resin, melamine resin (MF) resin, phenol resin (PF) resin, urea resin (UF) resin, alloy resin thereof and blended resin thereof. In addition, if soft touch feeling is required, a thermoplastic elastomer and thermosetting rubber may be used.

The resin film 13 may be made of, for example, a PET resin film, a PBT resin film, a PC resin film, an ABS resin film, a PMMA resin film, a PA resin film and a PU resin film. The resin film 13 may also be made of a lamination sheet, an alloy resin film, a blended resin film using these resin films or various leather sheets.
The resin film 13 may be decorated with characters, figures, patterns and so forth printed on the back surface thereof. Alternatively, the resin film 13 may be decorated as a metal-patterned film formed through metal deposition.
The thickness of the resin film 13 is preferably 50 micrometers to 500 micrometers. The resin film 13 thinner than 50 micrometers is inferior in shape retention capacity and thus retention of the shape of the margin 13a at the time of temporary molding of the resin film 13 is difficult. The resin film 13 thicker than 500 micrometers is difficult in temporary molding; and integration with the resin molded article is also difficult.
In order to increase adhesive force of the resin film 13 with the resin molded article 12, an adhesive agent, an adhesive, a primer and so forth may be applied to the back surface of the resin film 13.

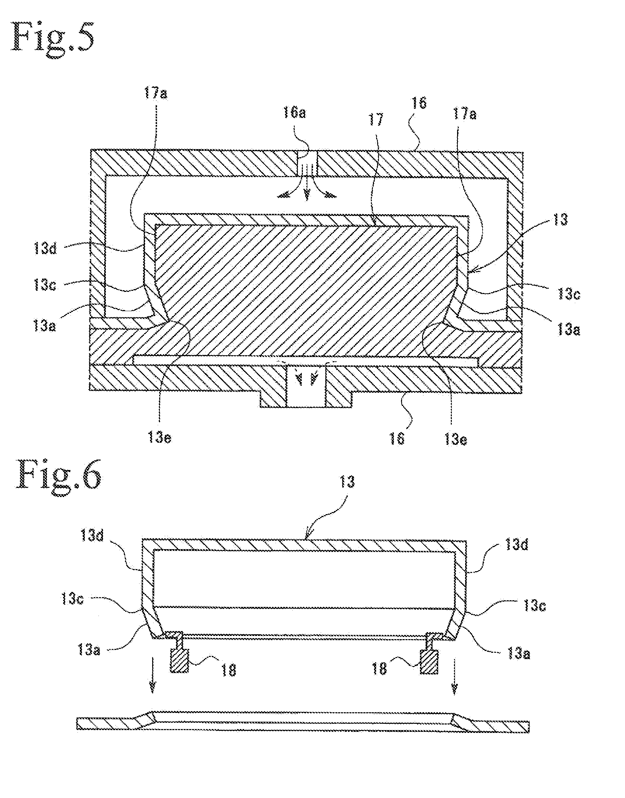

A method of manufacturing the decorative molded article 11 will be described.
A resin film 13 is formed through temporary molding from a large-sized sheet-like resin film 13. The temporary molding process of this resin film 13 will be described first.
First, as illustrated in Fig. 4, the sheet-like resin film 13 is fixed by a clamp 14 and is heat-softened with a heater 15.
Next, as illustrated in Fig. 5, the heat-softened resin film 13 and a male die 17 are placed inside a compression box 16, and compressed air is introduced through an inlet 16a of the compression box 16 in the directions indicated by the arrows so that the resin film 13 is brought into close contact with the male die 17. The resin film 13 is then cooled and taken out of the compression box 16. In this manner, the resin film 13 is temporarily molded into a three-dimensional shape corresponding to the resin molded article 12 through pressure molding using the compression box 16. This male die 17 includes a top portion 17a expanding from a narrowed portion and is substantially the same in shape as an outer shape of the resin molded article 12; thus the temporarily-molded resin film 13 includes a side surface 13d and a narrowed portion 13e. Although pressure molding is used in the present embodiment, press molding and vacuum molding may also be used.

Then, as illustrated in Fig. 6, the resin film 13 is cut near the narrowed portion 13e using a cutting tool 18. The obtained resin film 13 is bent inward along a bending line 13c with respect to the side surface 13d which constitutes an outer surface; and the margin 13a for covering the bottom surface 12a of the resin molded article 12 is formed. A bending angle of the margin 13a along the bending line 13c is an obtuse angle of more than 90 degrees between the side surface 13d, which constitutes the outer surface, and the margin 13a.

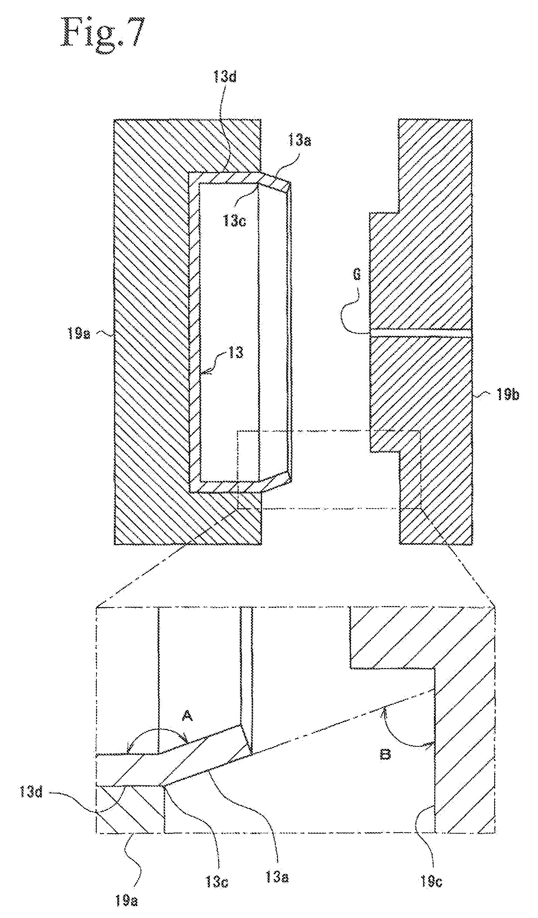

Next, a process in which the resin molded article 12 is molded integrally with this temporarily-molded resin film 13 will be described.
First, as illustrated in Fig. 7, the resin film 13 of a three-dimensional shape is inserted in a die 19a which constitutes a part of a cavity for molding the resin molded article 12. At this time, this resin film 13 is inserted with at least a part of the margin 13a protruding from the female die 19a. An angle A between the side surface 13d and the margin 13a in a state in which the resin film 13 is inserted is preferably an obtuse angle of more than 90 degrees and less than 180 degrees as described above. If the angle A is 180 degrees or more, it is possible that the margin 13a is bent in a direction opposite to a desired direction when the margin 13a is bent with a die 19b which constitutes another part of the cavity in a subsequent process. If the angle A is 90 degrees or less, the margin 13a forms an undercut configuration and thus it is necessary to use a special die provided with a sliding mechanism and so forth at the time of temporary molding of the resin film 13, which makes the temporary molding process complicated.
Next, the margin 13a of the resin film 13 is pressed inside with a die 19b which constitutes another part of the cavity for molding the resin molded article 12 (i.e., a positive die) so that the margin 13a is further bent along the bending line 13c. A contact angle B between the positive die 19b and an end of the margin 13a when they are brought into contact is preferably more than 0 degrees and 85 degrees or less with respect to a cavity surface 19c of the positive die 19b.
If the angle B is more than 85 degrees, it is possible that bending of the margin 13a becomes less smooth when the margin 13a is bent with the positive die 19b in the subsequent process and, as a result, the margin 13a collapses. If the angle B is 0 degrees or if the end of the margin 13a is bent too much to touch the positive die 19b, the margin 13a cannot be pressed inside with the positive die 19b, and it is therefore difficult to correctly align the bending line 13c with a boundary between the outer surface and the inner surface.

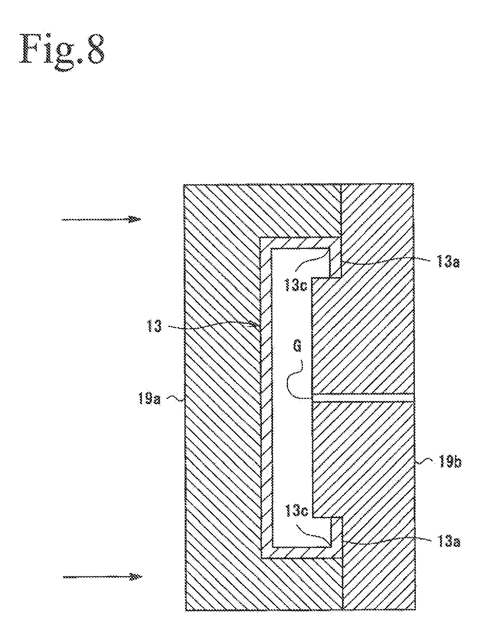

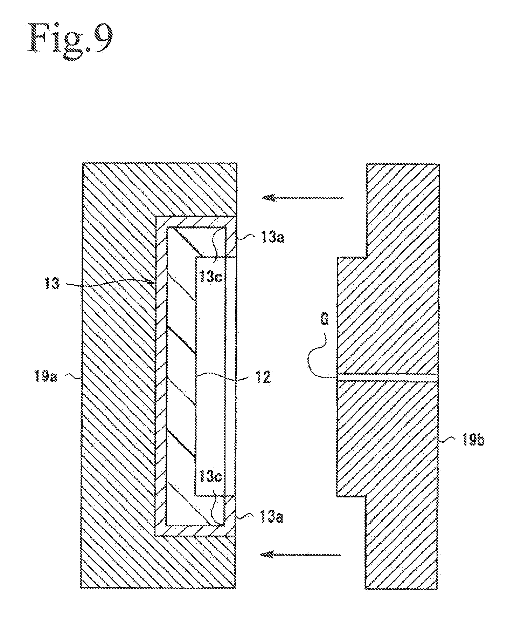

Then, as illustrated in Fig. 8, the female die 19a and the positive die 19b are clamped together. This clamping causes the margin 13a of the resin film 13 to be bent further inward from the bending line 13c. It is preferred in this bending process of the margin 13a that the positive die 19b presses the margin 13a inside so that the bending line 13c is completely bent inward and the bending line 13c is positioned along end portions of the dies 19a and 19b. However, it is also possible to place the resin film 13 along the dies 19a and 19b at the time of pouring molten resin even if the bending line 13c is not completely bent inward but is located at a certain distance from the end portions of the dies 19a and 19b.
Then molten resin is poured in from an inlet G of the positive die 19b to form the resin molded article 12; thus the resin molded article 12 and the resin film 13 are integrally molded. At the same time, the margin 13a is integrated with the resin molded article 12 on the inner surface side of the resin molded article 12. Although the resin molded article 12 is molded through injection molding in the present embodiment, the resin molded article 12 may also be molded through compression molding.
Finally, as illustrated in Fig. 9, the dies 19a and 19b are opened to demold the decorative molded article 11.
The decorative molded article 11 is obtained by the above-described manufacturing method.

According to the method of manufacturing the decorative molded article 11 and the decorative molded article 11, since the bending line 13c aligned with a surface edge of the outer surface 12a in the resin molded article 12 (i.e., a corner formed between the outer surface 12a and the bottom surface 12b) is formed in the resin film 13, the resin film 13 can be bent easily along the surface edge of the outer surface 12a in the resin molded article 12. With this, a shape of the surface edge in the outer surface 12a of the resin molded article 12 can be formed accurately in accordance with the cavity of the die. Further, since the margin 13a of the resin film 13 is bent on the back surface side of the resin film 13 along the bending line 13c and covers the bottom surface 12b of the resin molded article 12, an edge of the resin film 13 can be placed on the inner molded surface 12c side of the resin molded article 12 from the outer surface 12a of the resin molded article 12. With this, the edge of the resin film 13 can be made less visually recognizable and the decorative molded article 11 with improved appearance can be manufactured.
In the decorative molded article 11, since the margin 13a of the resin film 13 is provided along the entire edge of the resin film 13, the outer surface 12a of the resin molded article 12 can be covered with the resin film 13; thus the decorative molded article 11 with improved appearance can be achieved. Further, since the margin 13a provided along the entire edge of the resin film 13 partially overlaps on the bottom surface 12b of the resin molded article 12 without cutting the resin film 13 off in accordance with the shape of the resin molded article 12, there is no edge produced by such cutting off of the resin film 13; thus the decorative molded article 11 with improved appearance can be achieved.

A portion of the resin film 13 which covers the outer surface 12a of the resin molded article 12 and the bending line 13c can be formed at the same time through pressure molding; thus the bending line 13c of the resin film 13 is easily aligned with the surface edge of the outer surface 12a in the resin molded article 12. With this, the shape of the surface edge in the outer surface 12a of the resin molded article 12 can be formed accurately in accordance with the cavity of the die, and the margin 13a of the resin film 13 can be reliably placed on the inner molded surface 12c side of the resin molded article 12.

Since the margin 13a is formed outside the bending line 13c after the bending line 13c of the resin film 13 is formed, the margin 13a can be provided reliably and thus the resin film 13 can be bent along the bending line 13c on the back surface side at the time of the integral molding of the resin film 13 and the resin molded article 12. With this, the edge of the resin film 13 can be made less visually recognizable and the decorative molded article 11 with improved appearance can be manufactured.

Since the resin film 13 is temporarily bent at a position of the bending line 13c on the back surface side before the resin film 13 is inserted in the dies 19a and 19b for molding the resin molded article 12, the resin film 13 can be easily bent at the position of the bending line 13c on the back surface side in the molding process of the resin molded article 12, and the shape of the surface edge in the outer surface 12a of the resin molded article 12 can be accurately formed in accordance with the cavity of the die.

Since the margin 13a of the resin film 13 which has been temporarily bent in the clamping operation of the dies 19a and 19b for molding the resin molded article 12 is bent on the back surface side of the resin film 13 along the bending line 13c, the resin film 13 can be easily bent on the back surface side at the position of the bending line 13c at the time of molding the resin molded article 12, and the shape of the surface edge in the outer surface 12a of the resin molded article 12 can be accurately formed in accordance with the cavity of the die.

Since the resin film 13 is three-dimensionally molded through pressure molding, the resin film 13 can be three-dimensionally shaped only with a male die 9 and thus with a reduced die cost. In addition, in the three-dimensional molding process of the resin film 13, mass productivity can be enhanced with reduced time per 1 cycle; thus the less costly decorative molded article 11 can be obtained.

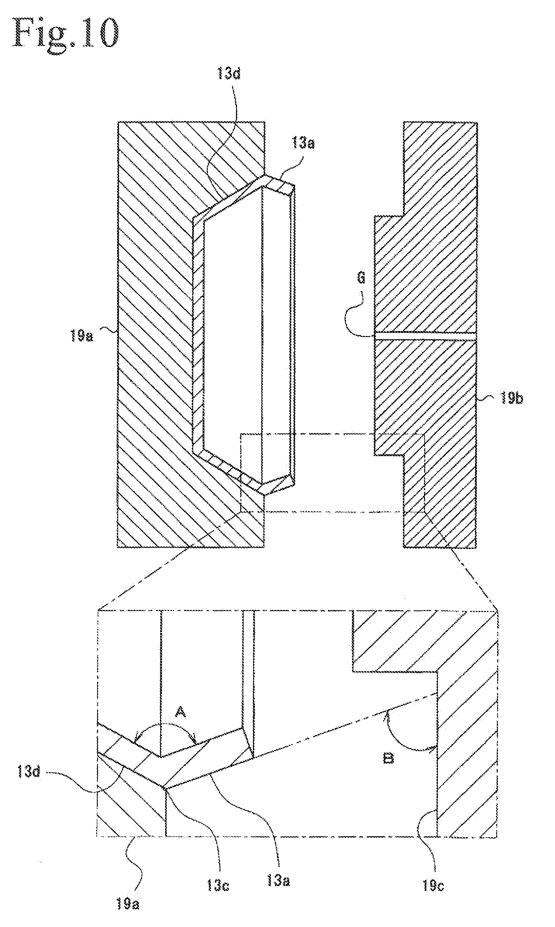

### First Modification of First Embodiment [Fig. 10]:

As illustrated in Fig. 10, a decorative molded article provided with an inclined side surface of the resin molded article 12 and a sharp acute-angled boundary between the outer surface and the inner surface can be formed.
Since an angle A made by the side surface 13d and the margin 13a of the resin film 13 can be defined more than 90 degrees, the resin film 13 can be temporarily molded without the need of using any special die provided with a sliding mechanism.

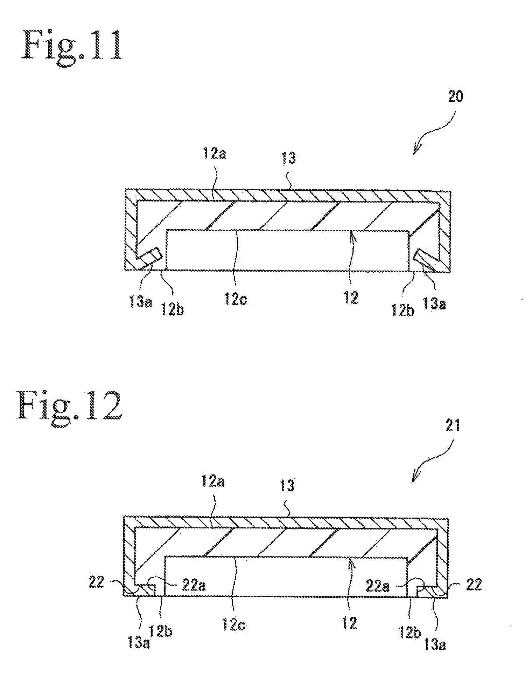

### Second Modification of First Embodiment [Fig. 11]:

In the decorative molded article 11 of the first embodiment, an example in which the margin 13a of the resin film 13 is fixed to the bottom surface 12b of the resin molded article 12 and is exposed to the inner surface has been described; however, as illustrated in Fig. 11, the margin 13a may also be embedded in the bottom surface 12b of the resin molded article 12 in a decorative molded article 20.
With this, the margin 13a of the resin film 13 which covers the outer surface 12a of the resin molded article 12 can be hidden in the bottom surface 12b of the resin molded article 12; accordingly, the decorative molded article 20 with a less visually recognizable edge of the resin film 13 and thus with improved appearance can be achieved. In addition, adhesive force between the margin 13a of the resin film 13 and the resin molded article 12 can be increased.

### Third Modification of First Embodiment [Fig. 12]:

In the decorative molded article 11 of the first embodiment, the margin 13a covers the entire bottom surface 12b of the resin molded article 12; however, in a decorative molded article 21 of a third modification, the margin 13a may cover a part of the bottom surface 12b and a surface of the margin 13a may form a surface substantially flush with the inner surface as illustrated in a sectional view of Fig. 12. Since a step height 22 equivalent to the thickness of the resin film 13 is formed in the bottom surface 12b of the resin molded article 12 and an edge of the margin 13a of the resin film 13 is fixed to an upright wall 22a of the step height 22, the edge of the resin film 13 can be firmly fixed to the step height 22 of the resin molded article 12 and thus the margin 13a of the resin film 13 can be less easily separated from the resin molded article 12.

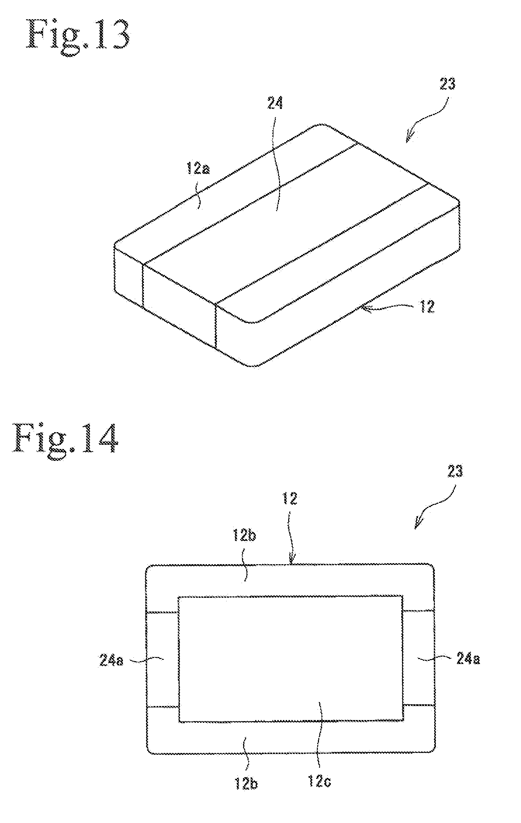

### Fourth Modification of First Embodiment [Figs. 13 and 14]:

In the decorative molded article 11 of the first embodiment, an example in which the resin film 13 which covers the entire surface of the outer surface 12a in the resin molded article 12 is used has been described; however, in a decorative molded article 23 of the present embodiment, a beltlike resin film 24 may be molded integrally with a resin molded article 12 along a longitudinal side of the resin molded article 12 as illustrated in a perspective view of Fig. 13 or in a bottom view of Fig. 14. On a width side of this resin film 24, margins 24a which cover and are fixed to a bottom surface 12b of the resin molded article 12 are provided.
It is also possible, as in this decorative molded article 23, to cover a part of the outer surface with a resin film without covering the entire visible outer surface with the resin film 24.
Also in the decorative molded article 23, if bending lines aligned with surface edges along a width side of the resin film 24 of the outer surface 12a in the resin molded article 12 are formed, the resin film 24 can be easily bent along the bending lines to form shapes of the surface edges on the outer surface 12a of the resin molded article 12 accurately in accordance with a cavity of a die by the same method of manufacturing the decorative molded article 11. Although longitudinal edges of the resin film 24 appear on the outer surface 12a of the resin molded article 12 in the decorative molded article 23, no burr of the resin film 24 is created and no boundary between the resin film 24 and edges of the resin molded article 12 are formed; thus the decorative molded article 23 with improved appearance can be obtained.

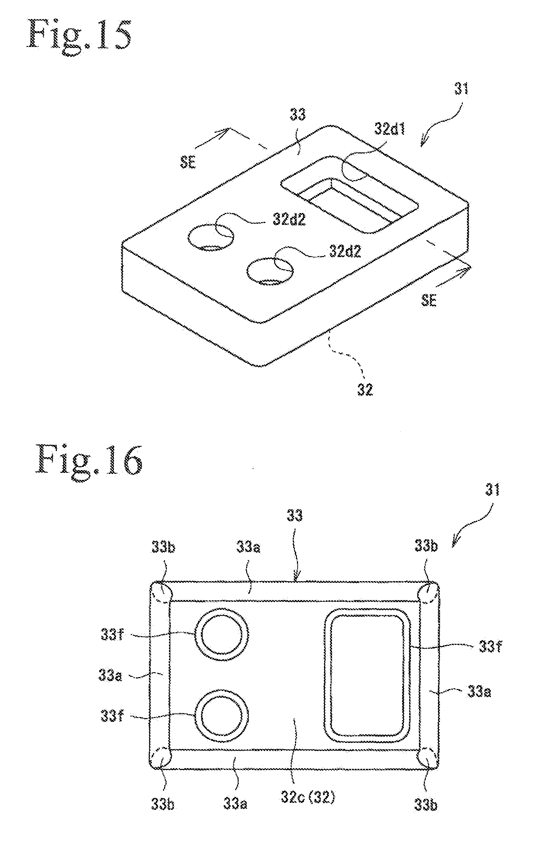

### Second Embodiment [Figs. 15 to 22]:

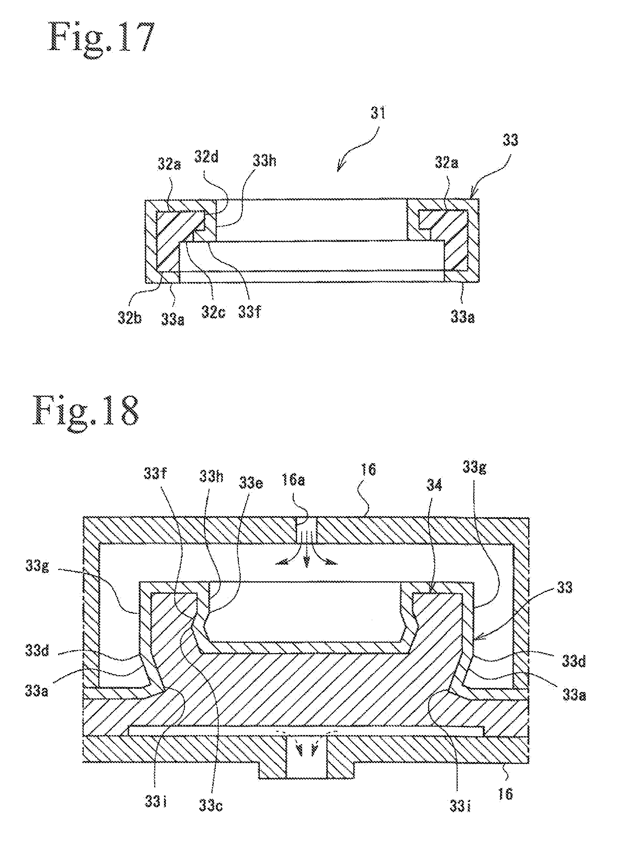

A decorative molded article 31 of a second embodiment is illustrated in Figs. 15 to 21. Fig. 15 is a perspective view of the decorative molded article 31; Fig. 16 is a bottom view of the decorative molded article 31; Fig. 17 is a sectional view along the line SE-SE of the decorative molded article 31; and Figs. 18 to 22 are explanatory views illustrating a method of manufacturing the decorative molded article 31. The decorative molded article 31 of the present embodiment differs from the above-described decorative molded article 11 in that through holes 32d are formed in the decorative molded article 31.

A resin molded article 32 is formed in a rectangular shape with a cavity defined inside which is similar to the above-described resin molded article 12. The resin molded article 32 includes an outer surface 32a, which is visible and is covered with a resin film 33, and a non-visible inner surface. The inner surface has a bottom surface 32b, which is in contact with the lower case, and an inner molded surface 32c inside the cavity. The resin molded article 32 differs from the resin molded article 12 in that the through holes 32d are formed to penetrate the thickness of the resin molded article 32. As the through holes 32d, a rectangular through hole 32d1 and two circular through holes 32d2 are provided. Push button switches, displays and so forth are mounted in the through holes 32d.

The resin film 33 includes an unillustrated decorative layer formed on a back surface thereof; and covers and decorates the outer surface 32a of the resin molded article 32. The resin film 33 differs from the resin film 13 described in the previous embodiment in that margins 33f of the resin film 33 extend toward an inner molded surface 32c from vertical wall sections 33h of the through holes 32d formed in the resin molded article 32.
The resin film 33 is bent and extends toward the bottom surface 32b from the outer surface 32a and forms a margin 33a which covers the bottom surface 32b of the resin molded article 32. The margin 33a is provided along the entire edge of the resin film 33 and, at corners, forms overlapping areas 33b where the margin 33a partially overlaps.

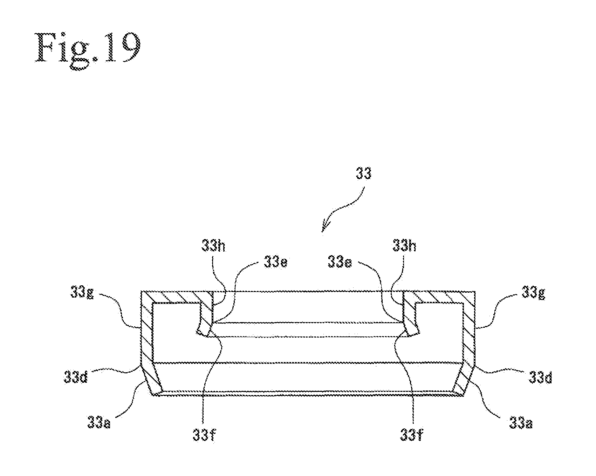

A method of manufacturing the decorative molded article 31 will be described.
The resin film 33 is formed first. First, a large-sized resin film 33 is fixed by a clamp 14 and is heat-softened with a heater 15.
Next, as illustrated in Fig. 18, the heat-softened resin film 33 and a male die 34 are placed inside a compression box 16, and compressed air is introduced through an inlet 16a of the compression box 16 in the directions indicated by the arrows so that the resin film 33 is brought into close contact with the male die 34. The resin film 33 is then cooled and taken out of the compression box 16. In this manner, the resin film 33 is formed in a three-dimensional shape through pressure molding using the compression box 16 and, at the same time, a bending line 33d and bending lines 33e are formed.
Projecting portions of the male die 34 used here are substantially the same in shape as an outer shape of the resin molded article 32. The resin film 33 molded in accordance with this male die 34 includes a narrowed portion 33i extending from a side surface 33g and forms a margin 33d and narrowed portion 33c extending from the vertical wall sections 33h corresponding to the through holes 32d and form the margins 33f.
The resin film 33 is then cut near the narrowed portions 33c and 33i using a cutting tool 18. This cutting forms the margin 33a which is bent on the back surface side of the resin film 33 along the bending line 33d to be folded on the inner surface and the margins 33f which are bent on the back surface side of the resin film 33 along the bending lines 33e to be folded on the inner molded surface 32c. In this manner, the resin film 33 as illustrated in Fig. 19 is obtained.

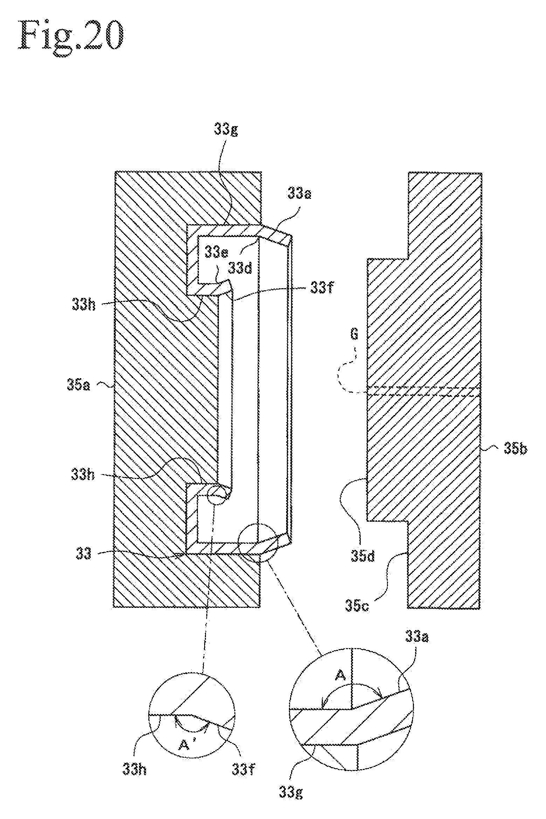

Next, the resin molded article 32 and the resin film 33 are integrally molded to form the decorative molded article 31.
First, as illustrated in Fig. 20, the above-described resin film 33 is inserted in a die 35a which constitutes a part of a cavity for molding the resin molded article 32. At this time, this resin film 33 is inserted with the margin 33a and the margins 33f protruding from this female die 35a. Also in the present embodiment, an angle A between each of the side surfaces 33g and each of the margins 33a in a state in which the resin film 33 is inserted is preferably an obtuse angle of more than 90 degrees and less than 180 degrees. An angle A' between each of the vertical wall sections 33h and each of the margins 33f is also preferably an obtuse angle of more than 90 degrees and less than 180 degrees.
Next, using a die 35b which constitutes a part of another cavity which forms the resin molded article 32, the margin 33a of the resin film 33 is pressed in and further bent along the bending line 33d and the margins 33f of the resin film 33 are pressed in and further bent along the bending lines 33e. At this time, a contact angle B (not illustrated) between a positive die 35b which constitutes a part of another cavity and an end of the margin 33a and a contact angle B' (not illustrated) between the positive die 35b and each of the margins 33f are preferably set such that the margin 33a and the margins 33f have angles of more than 0 degrees and 85 degrees or less with respect to cavity surfaces 35c and 35d of the positive die 35b.

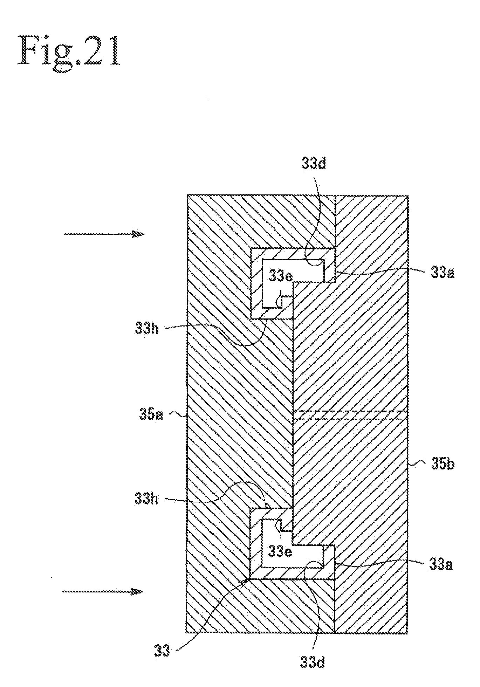

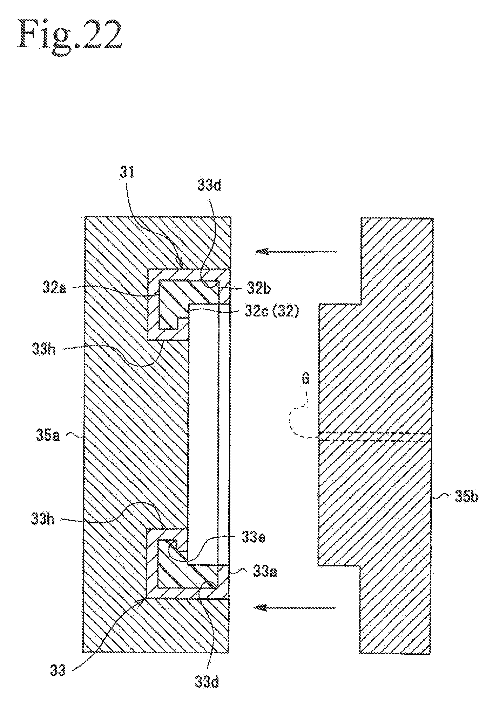

Then, as illustrated in Fig. 21, the female die 35a and the positive die 35b are clamped together. This clamping causes the margin 33a of the resin film 33 to be bent on a back side of the resin film 33 along the bending line 33d and causes the margins 33f of the resin film 33 to be bent on the back side of the resin film 33 along the bending lines 33e.
Then molten resin for forming the resin molded article 32 is poured in from an inlet G of the positive die 35b; thus the resin molded article 32 and the resin film 33 are integrally molded. At this time, the margin 33a and the margins 33f are also integrated with the resin molded article 32 on the inner surface side.
Finally, as illustrated in Fig. 22, the dies 35a and 35b are opened to demold the decorative molded article 31.
The decorative molded article 31 is obtained by the above-described manufacturing method.

According to the method of manufacturing the decorative molded article 31 and the decorative molded article 31, the margins 33f extend not only over the vertical wall sections 33h of the through holes 32d of the resin molded article 32 but reach the inner molded surface 32c; thus edges of the resin film 33 can be made less visually recognizable. With this, the decorative molded article 31 with improved appearance in which the resin molded article 32 is not visually recognizable at the through holes 32d can be achieved. Since the margin 33a extends on the inner molded surface 32c of the resin molded article 32, the decorative molded article 31 in which the resin molded article 32 is made not to visually recognized with an end portion of the outer surface of the resin molded article 32 and is thus improved in appearance can be achieved.

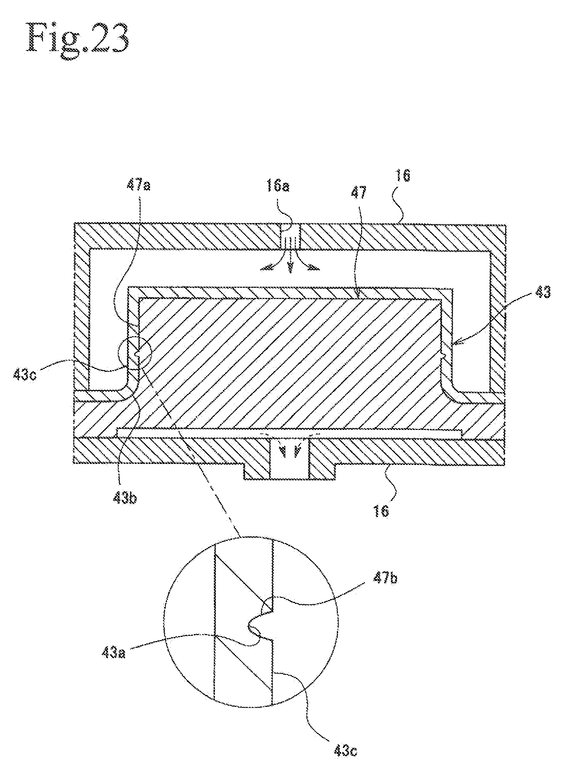

### Third Embodiment [Fig. 23]:

A decorative molded article 41 of the present embodiment differs from the decorative molded article 11 described in the previous embodiment in a method of manufacturing a resin film 43. In the present embodiment, a male die 47 illustrated in Fig. 23 is used in place of the male die 17 illustrated in Fig. 5 in a temporary molding process of the resin film 43. This male die 47 includes no narrowed portion for forming a bent margin but is provided with a projection 47b for pressing the resin film 43 in the thickness direction to form a bending line 43a.
When the bent portion 43b formed in the resin film 43 is cut off in a subsequent process, a portion below the bending line 43a becomes a margin 43c.
The thus-obtained resin film 43 can be processed in a manner similar to that of the resin film 13 described in the first embodiment in subsequent processes to obtain the decorative molded article 41 of the present embodiment; here, it is preferred to bent the margin 43c inward along the bending line 43a before the resin film 43 is inserted in a female die 19a.
Since the bending line 43a is provided by forming a recess in the resin film 43, the resin film 43 can be easily bent along the bending line 43a.

### First Modification of Third Embodiment:

The above-described bending line 43a is formed with the male die 47 at the time of temporary molding of the resin film 43; but the bending line 43a may also be formed in another process. Further, the bending line 43a is formed through pressing with the projections 47b; but the bending line 43a may also be formed by thinning the resin film 43 using, for example, a cutter at the portion corresponding to the bending line.

Various modifications described in the present embodiment are applicable to the first and second embodiments.

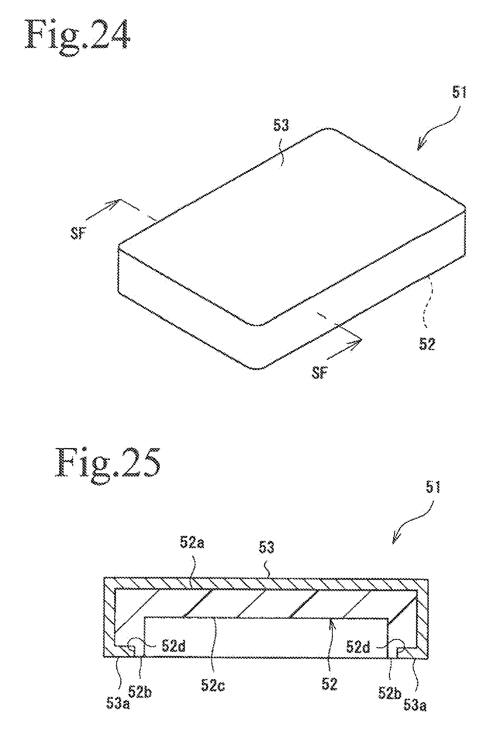

### Fourth Embodiment [Figs. 24 to 34]:

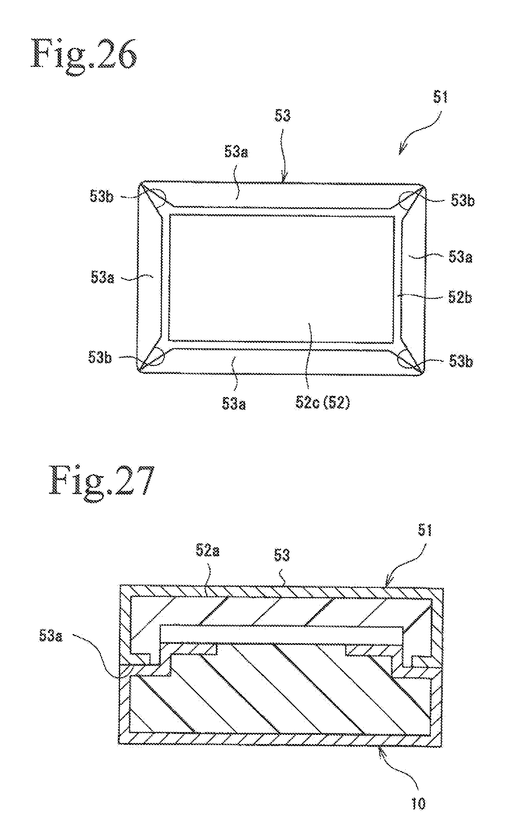

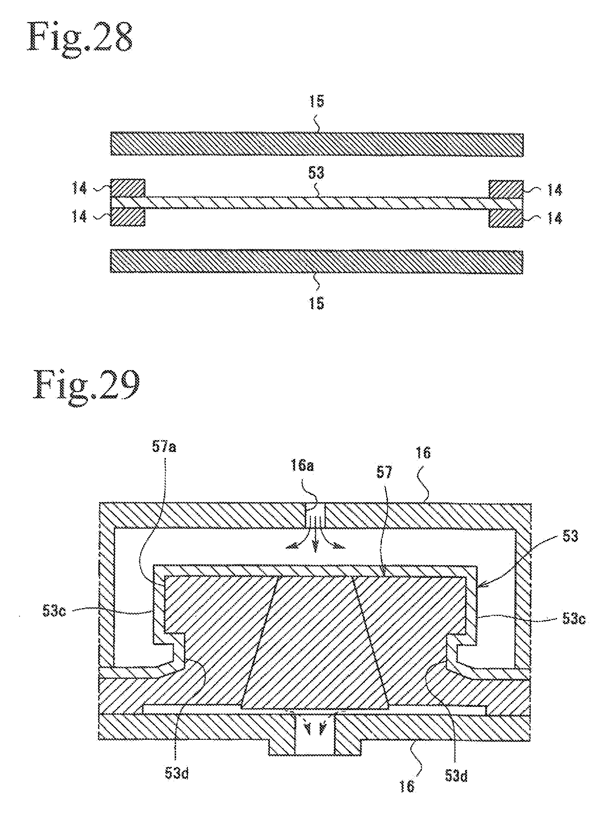

A decorative molded article 51 of a fourth embodiment is illustrated in Figs. 24 to 34. Fig. 24 is a perspective view of the decorative molded article 51; Fig. 25 is a sectional view along the line SF-SF of the decorative molded article 51; Fig. 26 is a bottom view of the decorative molded article 51; Fig. 27 is a sectional view of a case in which the decorative molded article 51 is used; and Figs. 28 to 34 are explanatory views illustrating a method of manufacturing the decorative molded article 51. The decorative molded article 51 of the present embodiment is provided with a resin molded article 52 and a resin film 53 which includes a decorative layer.
This decorative molded article 51 is an upper case as described above which forms combination parts in combination with a lower case 10 made by another decorative molded article as illustrated in Fig. 27.

The resin molded article 52 is formed in a rectangular shape with a cavity defined therein. This resin molded article 52 is constituted by an outer molded surface 52a which is on a visible outer surface side, a bottom surface 52b which is on a non-visible inner surface side and is in contact with the lower case 10, and an inner molded surface 52c which forms a cavity. A steps equivalent to the thickness of the resin film 53 is formed in the bottom surface 52b and an edge of a margin 53a of the resin film 53 is fixed to an upright wall 52d of the step.

The resin film 53, which covers the outer molded surface 52a of the resin molded article 52, has an unillustrated decorative layer formed on a back surface thereof and decorates the resin molded article 52. This resin film 53 is bent and extends from the outer molded surface 52a of the resin molded article 52 toward the bottom surface 52b of the resin molded article 52. A portion of the resin film 53 between the bent portion and an edge which is in contact with the upright wall 52d of the bottom surface 52b is formed as the margin 53a. That is, the margin 53a is provided as a portion of the resin film 53 extending toward the inner surface side from an end portion (i.e., a surface end) of the outer molded surface 52a which is a boundary between the outer molded surface 52a and the bottom surface 52b; thus the margin 53a overcomes the problem of unfavorable appearance at a boundary between the visible portion and the non-visible portion of the decorative molded article 51. Notches 53b are formed one at each of four corners of the bottom surface 52b.

A method of manufacturing the decorative molded article 51 will be described.
A temporary molding process in which the resin film 53 is formed through temporary molding from a large-sized sheet-like resin film 53 will be described first.
First, as illustrated in Fig. 28, the sheet-like resin film 53 is fixed by a clamp 14 and is heat-softened with a heater 15.
Next, as illustrated in Fig. 29, the heat-softened resin film 53 and a male die 57 are placed inside a compression box 16, and compressed air is introduced through an inlet 16a of the compression box 16 in the directions indicated by the arrows so that the resin film 53 is brought into close contact with the male die 57. The resin film 53 is then cooled and taken out of the compression box 16. In this manner, the resin film 53 is temporarily molded into a three-dimensional shape corresponding to the resin molded article 52 through pressure molding using the compression box 16. This male die 57 includes a top portion 57a expanding from a narrowed portion and is substantially the same in shape as an outer shape of the resin molded article 52; thus the temporarily-molded resin film 53 includes a side surface section 53c and a narrowed portion 53d, and the resin film 53 is bent vertically from the side surface section 53c toward the narrowed portion 53d. The resin film 53 which is temporarily molded in this manner has an undercut configuration and is difficult to be demolded from the male die 57; thus the male die 57 is provided with a sliding mechanism. Although pressure molding is used in the present embodiment, press molding and vacuum molding may also be used.

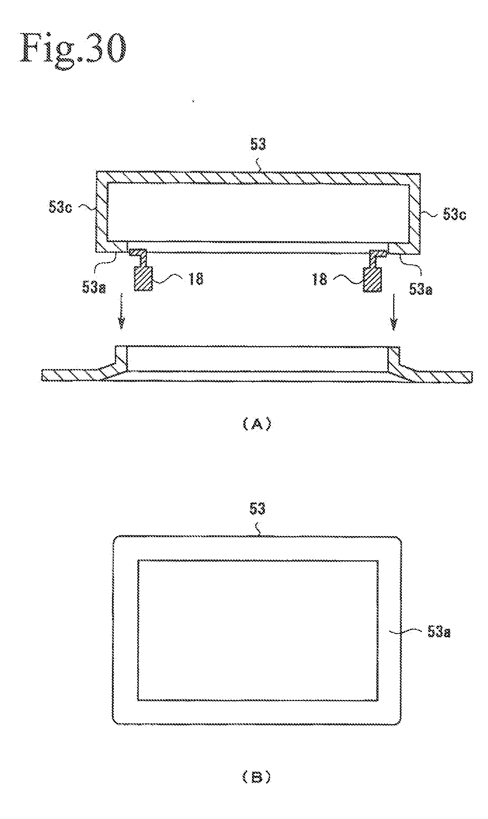

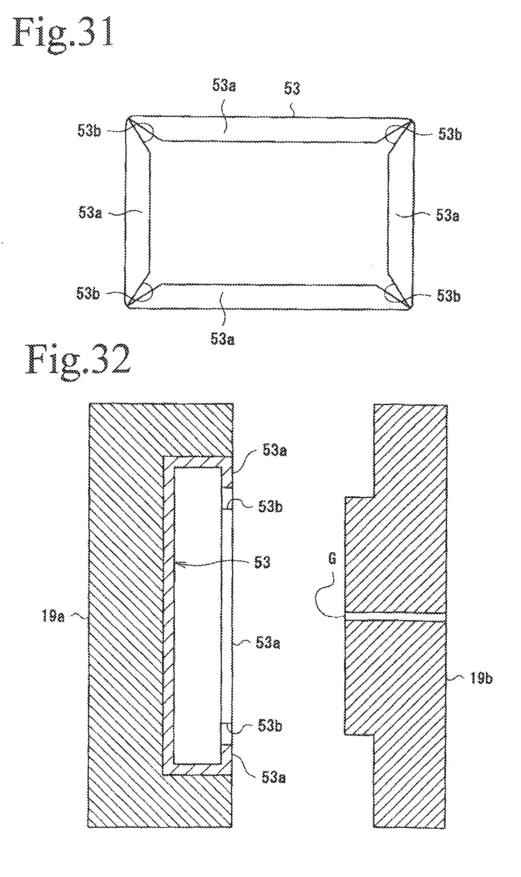

Next, a notch formation process in which the notches 53b are formed in the resin film 53 will be described.
After the temporary molding process, the resin film 53 is cut near the narrowed portion 53d using a cutting tool 18 as illustrated in Fig. 30(A). The obtained resin film 53 is bent substantially vertically inward from an end portion of the side surface section 53c which constitutes an outer surface and the bent portion constitutes the margin 53a which is fixed to the bottom surface 52b of the resin molded article 52. At this time, the margin 53a is formed in a rectangular circle shape as illustrated in Fig. 30(B).
The notches 53b are formed one at each corner of the margin 53a as illustrated in Fig. 31.

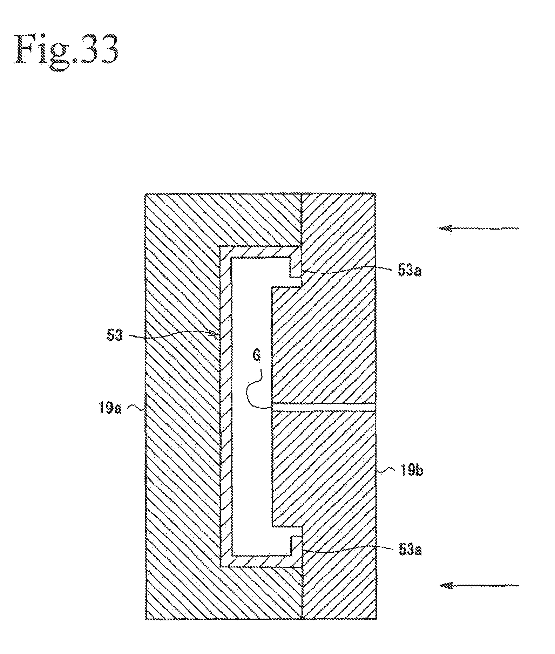

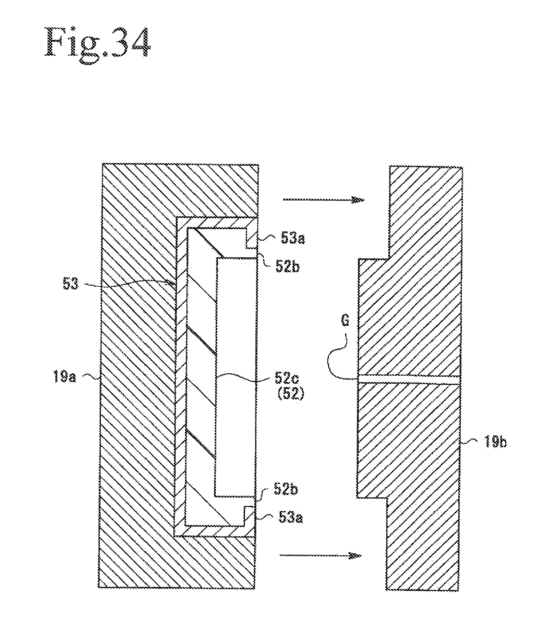

Finally, an integration process in which the resin film 53 and the resin molded article 52 are integrated with each other will be described.
As illustrated in Fig. 32, an outer surface side of the resin film 53 is inserted in the die 19a which constitutes a part of a cavity.
Next, as illustrated in Fig. 33, the die 19b which constitutes a part of another cavity which forms the resin molded article 52 is clamped.
Then molten resin is poured in from an inlet G of the die 19b to form the resin molded article 52 and thereby the resin molded article 52 and the resin film 53 are integrally molded. At the same time, the margin 53a is integrated with the resin molded article 52 on the inner surface side of the resin molded article 52. Although the resin molded article 52 is molded through injection molding in the present embodiment, the resin molded article 52 may also be molded through compression molding.
As illustrated in Fig. 34, the dies 19a and 19b are opened to demold the decorative molded article 51.
The decorative molded article 51 is obtained by the above-described manufacturing method.

According to the method of manufacturing the decorative molded article 51 and the decorative molded article 51, an end portion of the outer surface which is the boundary between the outer surface and the inner surface can be reliably covered with the resin film 53; thus the decorative molded article 51 with improved appearance can be achieved. Since the notches 53b are provided in the margin 53a, wrinkles are less easily formed in the margin 53; and thereby creases in the margin 53 are less easily produced.
Since the margin 53a is integrated with the inner surface side of the resin molded article 52 as the resin molded article 52 is molded and integrated with the resin film 53, the margin 53a can also be reliably integrated with the bottom surface 52b of the resin molded article 53 by means of the resin film 53 which covers the outer molded surface 52a of the resin molded article 52.

Since the notch formation process of the resin film 53 is performed after the temporary molding process, no displacement of the notches 53b in the resin film 53 occurs and thus the notches 53b can be less easily exposed to the outer surface. With this, the decorative molded article 51 with improved appearance can be achieved. If temporary molding is performed for resin films 53 equivalent to a plurality of resin films out of a large-sized resin film 53 and the temporarily-drawn resin films 53 are divided into individual pieces, the decorative molded article 51 can be mass produced with reduced manufacturing cost and thus less costly decorative molded article 51 can be obtained.

Since the temporary molding process of the resin film 53 is performed through pressure molding, it is only necessary to prepare one male die 57, whereby the die cost can be reduced as compared with compression molding. If the resin film 53 is temporarily molded through pressure molding, time per 1 cycle can be reduced and mass productivity can be improved, whereby the less costly decorative molded article 51 can be obtained.

Since the margin 53b is formed in the entire portion between the boundary between the outer surface and the inner surface and the inner surface in the decorative molded article 51, appearance of a portion at which the outer surface is in contact with the inner surface (i.e., an end portion of the outer surface) can be improved.

Since a surface of the margin 53b forms a surface substantially flush with the bottom surface 52b, the margin 53b can be exposed to the inner surface. With this, in components in which the upper case 51 and the lower case 10 are combined according to the decorative molded article 51, inner surfaces to which the resin film 53 is exposed can be made as overlapping areas; thus highly accurate combination parts with no gaps nor burr in the overlapping areas can be achieved.

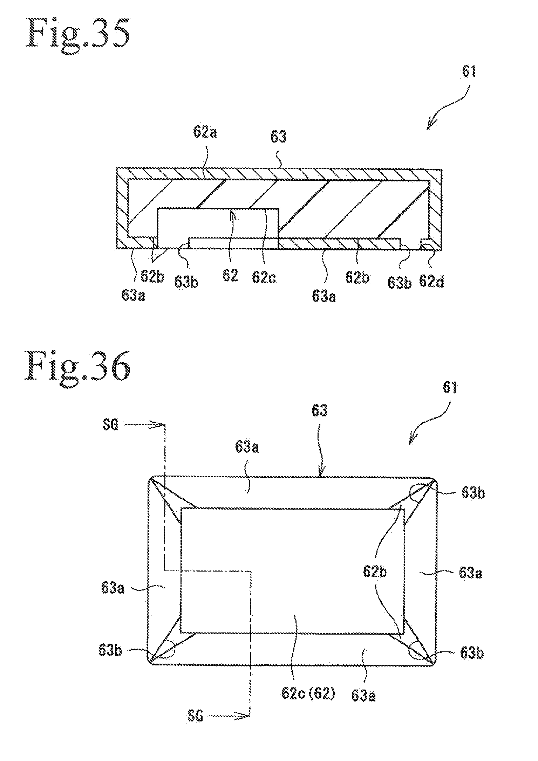

### Fifth Embodiment [Figs. 35 to 42]:

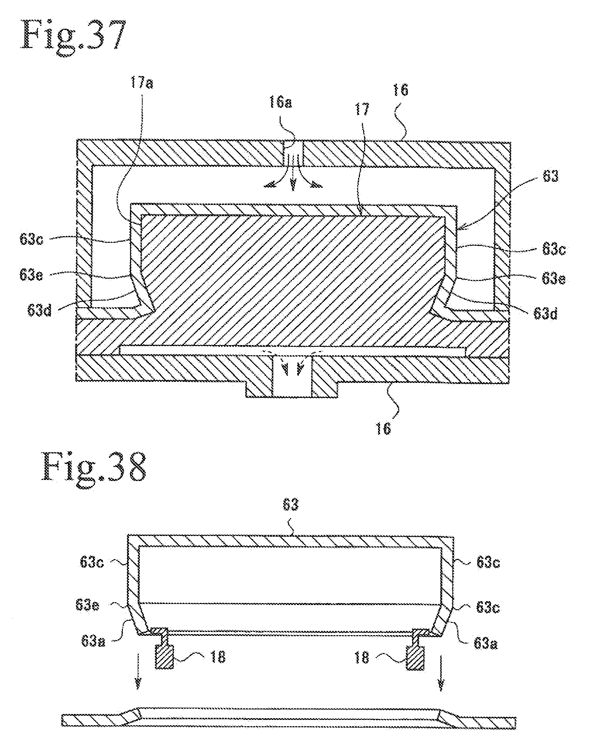

A decorative molded article 61 of a fifth embodiment is illustrated in Figs. 35 to 42. Fig. 35 is a sectional view of a decorative molded article 61; Fig. 36 is a bottom view of the decorative molded article 61; and Figs. 37 to 42 are explanatory views illustrating a method of manufacturing the decorative molded article 61. A decorative molded article 61 of the fifth embodiment differs from the decorative molded article 51 of the fourth embodiment in configurations of a resin molded article 62 and a resin film 63 on inner surface sides thereof, and in methods of manufacturing the same. Other configurations, operations and effect are the same as those of the decorative molded article 51.

The resin molded article 62 is formed in a rectangular shape with a cavity defined inside in a similar manner to the resin molded article 52 of the fourth embodiment. The resin molded article 62 is constituted by an outer molded surface 62a on an outer surface side, a bottom surface 62b on an inner surface side and an inner molded surface 62c. The resin molded article 62 differs from the resin molded article 52 in a step formed on the bottom surface 62b. Edges of notches 63b in a margin 63a of the later-described resin film 63 are fixed to an upright wall 62d of the step. That is, the upright wall 52d of the resin molded article 52 is in contact with the entire edge of the margin 53a whereas the upright wall 62d of the resin molded article 62 is in contact with the edges of the notches 63b in the margin 63a.

The resin film 63, which covers the outer molded surface 62a of the resin molded article 62 in a similar manner to the resin film 53 of the fourth embodiment, has an unillustrated decorative layer formed on the back surface thereof and decorates the resin molded article 62. This resin film 63 is bent and extends from the outer surface 62a of the resin molded article 62 toward the bottom surface 62b of the resin molded article 62 and thus overcomes the problem of unfavorable appearance at a boundary between a visible portion and a non-visible portion of the decorative molded article 61. The resin film 63 differs from the resin film 53 in a configuration that the margin 63a fixed to the bottom surface 62b covers the bottom surface 62b except for the notches 63b formed one at each of four corners of the bottom surface 62b.

A method of manufacturing the decorative molded article 61 will be described.
The resin film 63 is formed through temporary molding from a large-sized sheet-like resin film 63. The temporary molding process of this resin film 63 will be described first.
First, the sheet-like resin film 63 is fixed by a clamp and is heat-softened with a heater (see Fig. 28).
Next, as illustrated in Fig. 37, the heat-softened resin film 63 and a male die 17 are placed inside a compression box 16, and compressed air is introduced through an inlet 16a of the compression box 16 in the directions indicated by the arrows so that the resin film 63 is brought into close contact with the male die 17. The resin film 63 is then cooled and taken out of the compression box 16. In this manner, the resin film 63 is temporarily molded into a three-dimensional shape corresponding to the resin molded article 62 through pressure molding. Since this male die 17 includes a top portion 17a expanding from a narrowed portion and is substantially the same in shape as an outer shape of the resin molded article 62, the temporarily-molded resin film 63 includes a side surface 63c and a narrowed portion 63d.

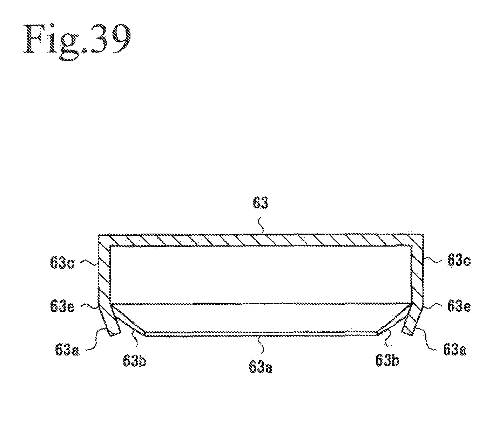

Then, as illustrated in Fig. 38, the resin film 63 is cut near the narrowed portion 63d using a cutting tool 18. The obtained resin film 63 is bent inward along a bending line 63e with respect to the side surface 63c which constitutes an outer surface. Thus the margin 63a which covers the bottom surface 62a of the resin molded article 62 is formed. A bending angle of the margin 63a along the bending line 63e is an obtuse angle of more than 90 degrees between the side surface 63c, which form the outer surface, and the margin 63a.
Then the notches 63b which divide the margin 63a into four sections are formed in the resin film 63 as illustrated in Fig. 39.

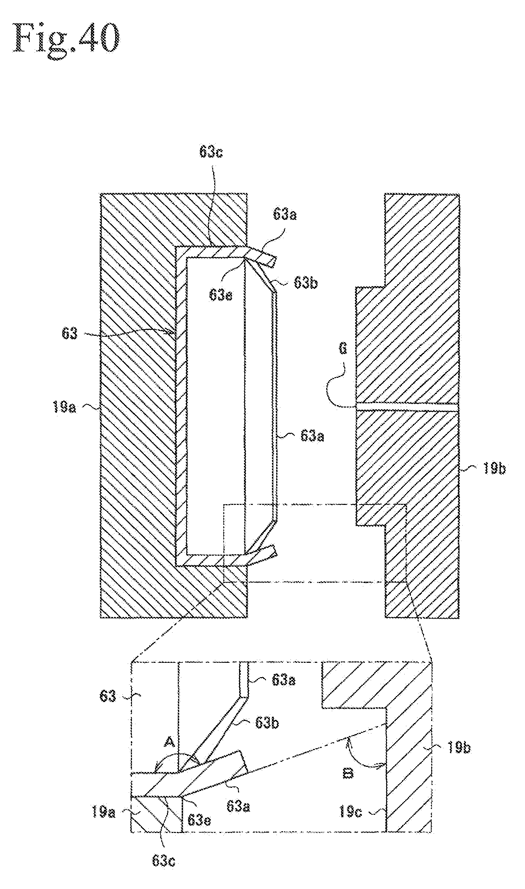

Next, a process in which the resin molded article 62 is integrated with this temporarily-molded resin film 63 will be described.
First, as illustrated in Fig. 40, the resin film 63 of a three-dimensional shape is inserted in a die 19a which constitutes a part of a cavity for molding the resin molded article 62. At this time, this resin film 63 is inserted with at least a part of the margin 63a protruding from the female die 19a. An angle A between the side surface 63c and the margin 63a in a state in which the resin film 63 is inserted is preferably an obtuse angle of more than 90 degrees and less than 180 degrees as described above. If the angle A is 180 degrees or more, it is possible that the margin 63a is bent in a direction opposite to a desired direction when the margin 63a is bent with a die 19b which constitutes another part of the cavity in a subsequent process. If the angle A is 90 degrees or less, the margin 63a forms an undercut configuration and thus it is necessary to use a special die provided with a sliding mechanism and so forth at the time of temporary molding of the resin film 63, which makes the temporary molding process complicated.
Next, the margin 63a of the resin film 63 is pressed in with a die 19b which constitutes another part of the cavity for molding the resin molded article 62 (i.e., a positive die) so that the margin 63a is further bent along the bending line 63e. A contact angle B between the positive die 19b and an end of the margin 63a when they are brought into contact is preferably more than 0 degrees and 85 degrees or less with respect to a cavity surface 19c of the positive die 19b.
If the angle B is more than 85 degrees, it is possible that bending of the margin 63a becomes less smooth when the margin 63a is bent with the positive die 19b in the subsequent process and, as a result, the margin 63a collapses. If the angle B is 0 degrees or if the end of the margin 63a is bent too much to touch the positive die 19b, the margin 63a cannot be pressed inside with the positive die 19b; it is therefore difficult to correctly align the bending line 63e with a boundary between the outer surface and the inner surface.

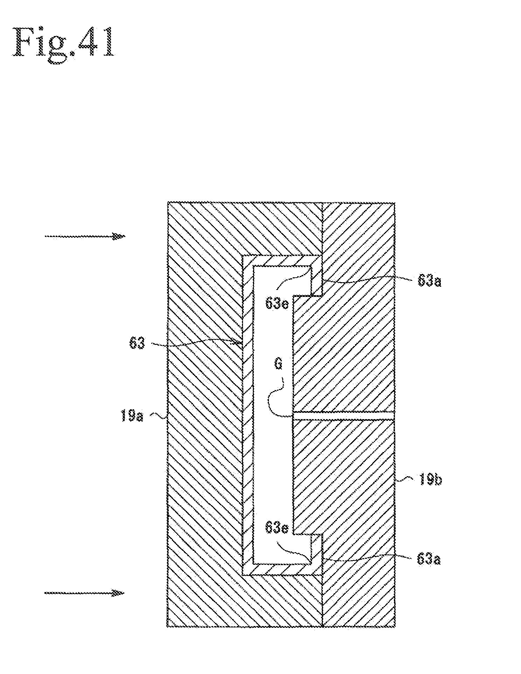

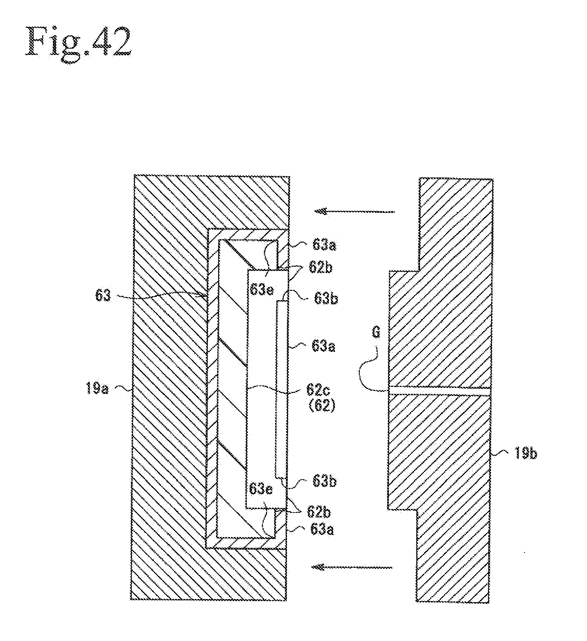

Then, as illustrated in Fig. 41, the female die 19a and the positive die 19b are clamped together. This clamping causes the margin 63a of the resin film 63 to be bent further inward along the bending line 63e. It is preferred in this bending process of the margin 63a that the positive die 19b presses the margin 63a inward so that the bending line 63e is completely bent inward and the bending line 63e is positioned along end portions of the dies 19a and 19b. However, it is also possible to place the resin film 63 along the dies 19a and 19b at the time of pouring molten resin even if the bending line 63e is not completely bent inward but is located at a certain distance from the end portions of the dies 19a and 19b.
Then molten resin is poured in from an inlet G of the positive die 19b to form the resin molded article 62; thus the resin molded article 62 and the resin film 63 are integrally molded. At the same time, the margin 63a is integrated with the resin molded article 62 on the inner surface side of the resin molded article 62. Although the resin molded article 62 is molded through injection molding in the present embodiment, the resin molded article 62 may also be molded through compression molding.
Finally, as illustrated in Fig. 42, the dies 19a and 19b are opened to demold the decorative molded article 61.
The decorative molded article 61 is obtained by the above-described manufacturing method.

According to the method of manufacturing the decorative molded article 61 and the decorative molded article 61, Since the bending line 63e is formed in the resin film 63, the resin film 63 can be bent easily along the portion of the bending line 63e, and thus an end portion of the outer surface which is the boundary between the outer surface and the inner surface can be deformed with high dimensional accuracy. In addition, since the notches 63b are formed after the bending line 63e is formed in the resin film 63, misalignment of the notches 63b occur less easily; thus the notches 63b are less easily exposed to the outer surface.

Since the process of forming the bending line 63e is included in the temporary molding process, three-dimensional formation of the resin film 63 and formation of the margin 63a and the bending line 63e can be performed simultaneously. With this, the resin film 63 is easily inserted in the die 19a for forming the resin molded article 62 and the bending line 63e of the resin film 63 is easily aligned with the surface edges of the outer molded surface 62a in the resin molded article 62.

Since the bending angle of the margin 63a along the bending line 63e is more than 90 degrees and less than 180 degrees between the outer surface side and the margin 63a at the time of forming the bending line 63e in the temporary molding process, it is not necessary to provide the male die 17 with a special mechanism, the manufacture of the decorative molded article 61 is simplified and the less costly decorative molded article 61 can be obtained.

Since the contact angle between the positive die 19b and the end of the margin 63a is more than 0 degrees and 85 degrees or less with respect to a cavity surface 19c of the positive die 19b at the time of bending the margin 63a along the bending line 63e in the integration process, the margin 63a can be reliably bent inward on the inner surface side when the margin 63a is brought into contact with the positive die 19b at the time of clamping for forming the resin molded article 62.

The outer surface side of the resin film 63 is positioned along the cavity surface of the die 19a and the margin 63a which constitutes the inner surface side of the resin film 63 is positioned along the cavity surface of the die 19b when the dies 19a and 19b are clamped together in the integration process; thus the outer molded surface 62a of the resin molded article 62 and a portion of the bottom surface 62b adjacent to the outer molded surface 62a can be covered with the resin film 63. With this, the decorative molded article 61 with improved appearance can be obtained.

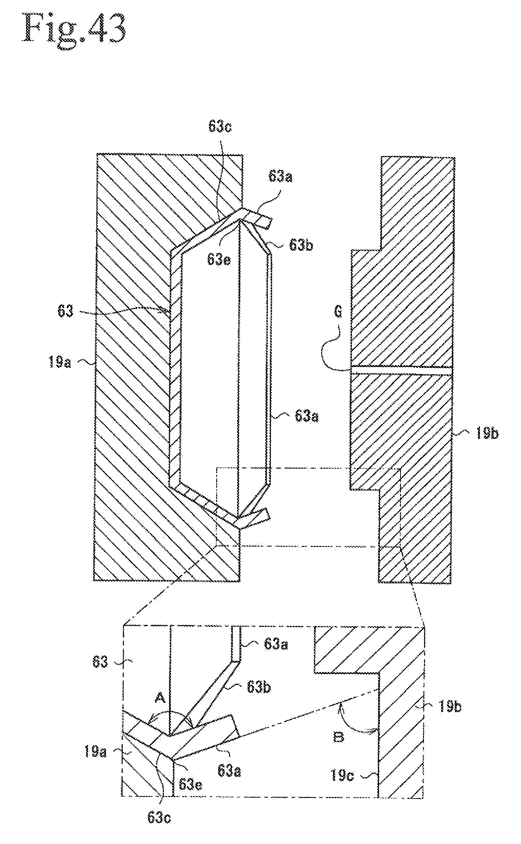

### Modification of Decorative Molded Article in Fifth Embodiment [Fig. 43]:

In the decorative molded article 61 of the fifth embodiment, an example in which the corner between the outer molded surface 62a and the bottom surface 62b in the resin molded article 62 is right-angled has been described; however, in a modification, even if the corner between the outer molded surface and the bottom surface in the resin molded article is acute-angled, the resin film 63 can be temporarily molded without the need of using any special die provided with a sliding mechanism as long as the angle A made by the side surface 63c and the margin 63a of the resin film 63 is an angle more than 90 degrees. If the contact angle B between the positive die 19b and the end of the margin 63a is more than 0 degrees and 85 degrees or less with respect to the cavity surface 19c of the positive die 19b, the margin 63a can be reliably bent inward on the inner surface side when the margin 63a is brought into contact with the positive die 19b at the time of clamping for forming the resin molded article 62.

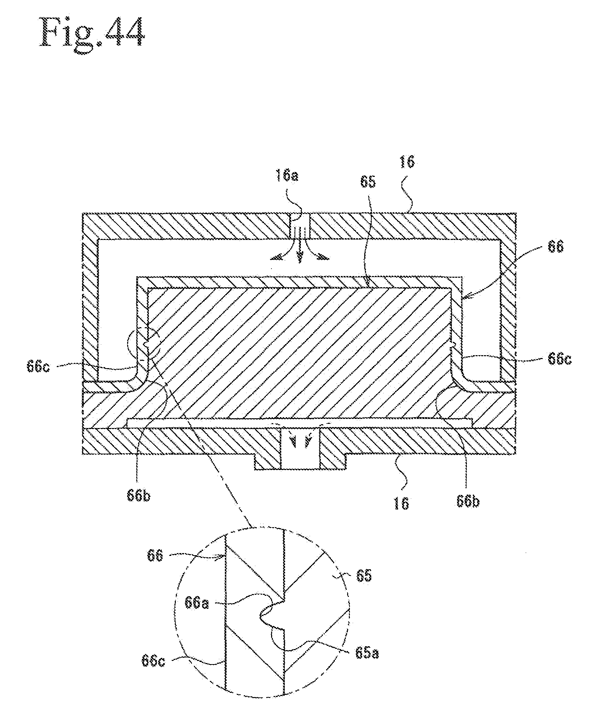

### First Modification of Method of Manufacturing in Fifth Embodiment [Fig. 44]:

In the decorative molded article 61 of the fifth embodiment, an example in which the bending angle of the margin 63a along the bending line 63e is set to be more than 90 degrees and less than 180 degrees between the outer surface side and the margin 63a using the male die 17 in the temporary molding process of the resin film 63 has been described; here, a male die 65 is used in a first modification of the method of manufacturing as illustrated in Fig. 44. This male die 65 includes no narrowed portion for forming a bent margin but is provided with a projection 65a for pressing a resin film 66 in the thickness direction to form a bending line 66a. When a bent portion 66b formed in the resin film 66 is cut off in a subsequent process, a portion of the resin film 66 further toward an edge thereof from the bending line 66a becomes a margin 66c.
The thus-obtained resin film 66 can be processed in a similar manner to the resin film 63 described in the fifth embodiment in subsequent processes to obtain the decorative molded article 61; here, it is preferred to bent the margin 66c inward along the bending line 66a before the resin film 66 is inserted in a female die 19a. Since the bending line 66a which is formed as a recess is provided in the resin film 66, the resin film 66 can be bent easily along the bending line 66a.

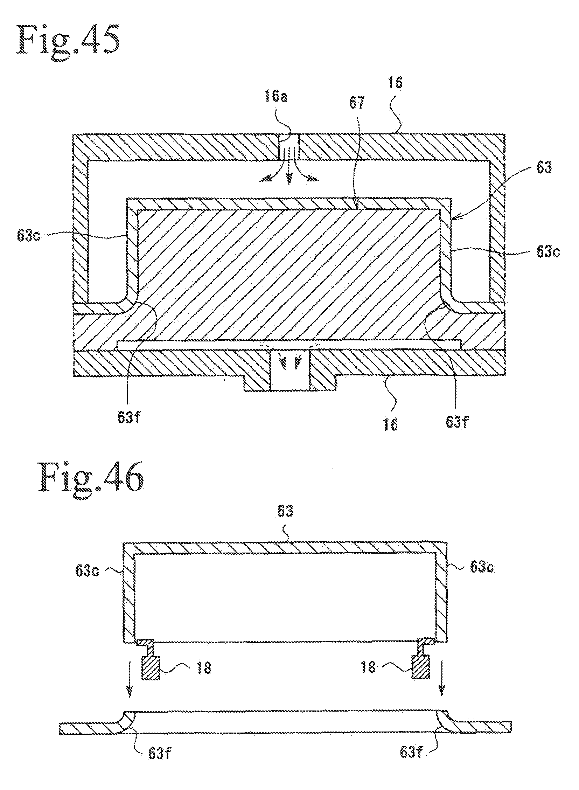

### Second Modification of Method of Manufacturing in Fifth Embodiment [Figs. 45 to 48]:

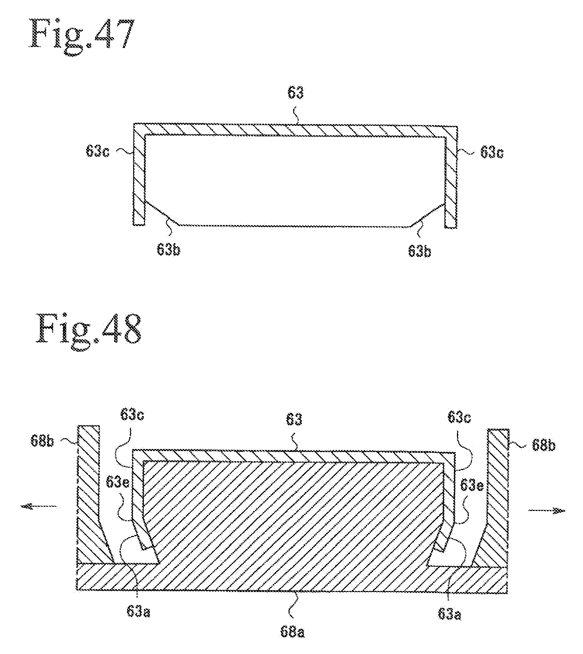

In the decorative molded article 61 of the fifth embodiment, an example in which the bending angle of the margin 63a along the bending line 63e is set to be more than 90 degrees and less than 180 degrees between the outer surface side and the margin 63a using the male die 17 in the temporary molding process of the resin film 63 has been described; in a second modification of the method of manufacturing as illustrated in Fig. 45, a male die 67 is used. The male die 67 includes no narrowed portion for forming a bent margin and has no projection for pressing a resin film 63 in the thickness direction. Then a bent portion 63f formed in the resin film 63 is cut off as illustrated in Fig. 46; the notches 63b are formed at edges of corners formed between side surface sections 63c as illustrated in Fig. 47; and the resin film 63 is temporarily molded using jigs 68a and 68b as illustrated in Fig. 48. The jig 68a includes a top portion expanding from a narrowed portion and this top portion is substantially the same in shape as an outer shape of the resin molded article 62. The jig 68b compresses the resin film 63 set in the jig 68a from a side surface side. A side surface section 63c is formed in the temporarily-molded resin film 63 by being compressed between the top portion of the jig 68a and the jig 68b; the side surface section 63c is bent inward along the bending line 63e at a narrowed portion; and the margin 63a is formed by being compressed between the narrowed portion of the jig 68a and the jig 68b. A bending angle of the margin 63a along the bending line 63e is an obtuse angle of more than 90 degrees between the side surface section 63c and the margin 63a. The decorative molded article 61 can be obtained by processing similar to that of the resin film 63 described in the fifth embodiment in subsequent processes.

Modifications common to the fourth and fifth embodiments will be described.

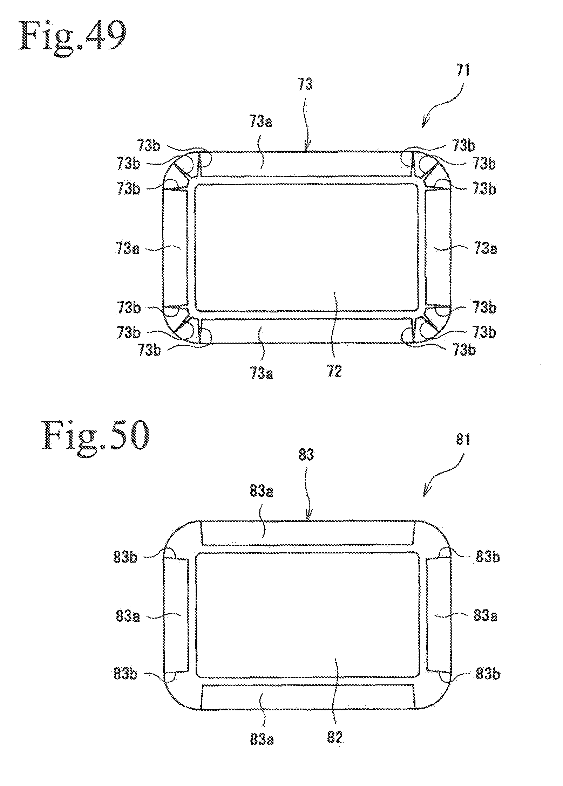

### First Modification Common to Fourth and Fifth Embodiments [Fig. 49]:

In the decorative molded articles 51 and 61, examples in which the notches 53b and 63b of the resin films 53 and 63 are formed one at each of four corners of the bottom surfaces 52b and 62b in the resin molded articles 52 and 62 have been described; in a decorative molded article 71 of a first modification, a plurality of notches 73b (three in the drawing) may be formed at each of four corners of a resin molded article 72 in a margin 73a of a resin film 73. With the thus increased number of divisions of the margin 73a, wrinkles of the margin 73a may be formed less easily; and thereby creases of the resin film 72 may be formed less easily at the corners of the resin molded article 72.

### Second Modification Common to Fourth and Fifth Embodiments [Fig. 50]:

In the decorative molded articles 51 and 61, examples in which the substantially V-shaped notches 53b and 63b of the resin films 53 and 63 are formed one at each of four corners of the bottom surfaces 52b and 62b in the resin molded articles 52 and 62 have been described; in a decorative molded article 81 of a second modification, sections of a margin 83a of a resin film 83 at four corners of a resin molded article 82 may be removed. That is, notches 83b of the resin film 83 are formed by cutting off the sections of the margin 83a at the corners of the resin molded article 82. By not forming the margin 83a at the corners where creases are easily formed, occurrence of the creases can be prevented.

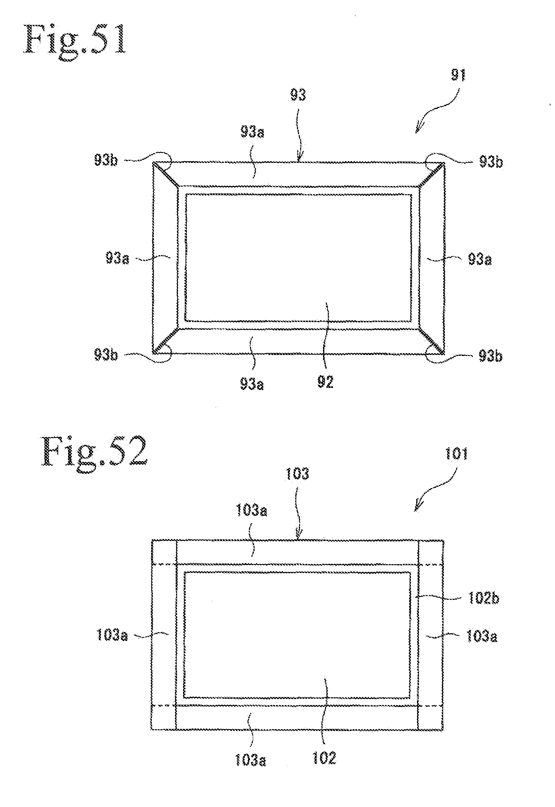

### Third Modification Common to Fourth and Fifth Embodiments [Fig. 51]:

In the decorative molded articles 51 and 61, examples in which the substantially V-shaped notches 53b and 63b of the resin films 53 and 63 are formed one at each of four corners of the bottom surfaces 52b and 62b in the resin molded articles 52 and 62 have been described; in a decorative molded article 91 of a third modification, diagonally extending linear notches 93b may be formed one at each of four corners of a resin molded article 92 in a margin 93a of a resin film 93. Also in this manner, wrinkles of the margin 93a may be formed less easily and thereby creases of the resin film 92 may be formed less easily at the corners of the resin molded article 92. Note that such linear notches 93b are preferred in the resin molded article 92 with angular corners.

### Fourth Modification Common to Fourth and Fifth Embodiments [Fig. 52]:

In the decorative molded articles 51 and 61, examples in which the substantially V-shaped notches 53b and 63b of the resin films 53 and 63 are formed one at each of four corners of the bottom surfaces 52b and 62b in the resin molded articles 52 and 62 have been described; in a decorative molded article 101 of a fourth modification, divided sections of a margin 103a may be laminated each other at each of four corners of a resin molded article 102. Also in this manner, wrinkles of the margin 103a may be formed less easily and thereby creases of the resin film 102 may be formed less easily at the corners of the resin molded article 102. In this modification, linear notches are provided at corners of the margin 103a; sections of the margin 103a along a longitudinal side of the resin molded article 102 are bent and brought into close contact with a bottom surface 102b of the resin molded article 102; and then sections of the margin 103a along a width side are bent and brought into close contact with the bottom surface 102b of the resin molded article 102.

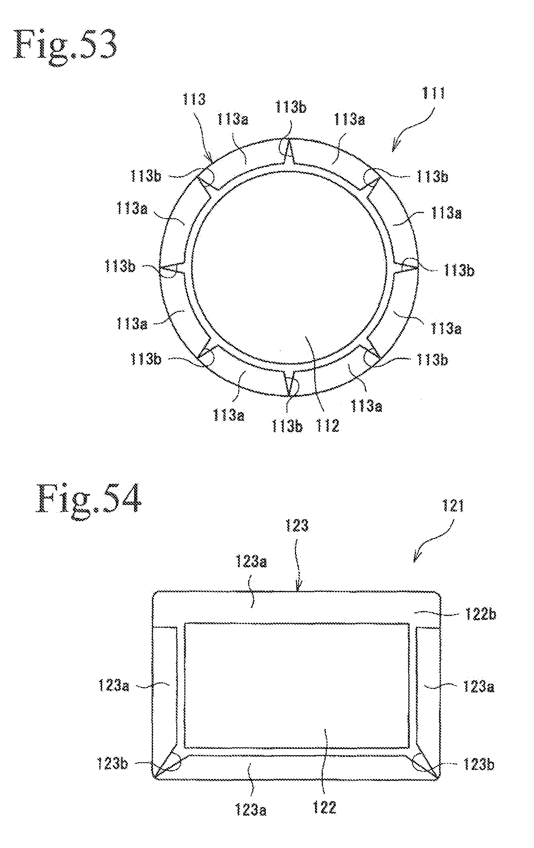

### Fifth Modification Common to Fourth and Fifth Embodiments [Fig. 53]:

In the decorative molded articles 51 and 61, the resin molded articles 52 and 62 which are in rectangular shapes when seen in a plan view have been described; in a decorative molded article 111 of a fifth modification, a resin molded article 112 may be in a circular shape when seen in a plan view. Although wrinkles easily occur in an entire margin 113a of a resin film 113 in the circular resin molded article 112, creases may be formed less easily by forming eight notches 113b at equal intervals in this modification.

### Sixth Modification Common to Fourth and Fifth Embodiments [Fig. 54]:

In the decorative molded articles 51 and 61, examples in which the margins 53a and 63a of the resin films 53 and 63 are fixed to the entire bottom surfaces 52b and 62b in the resin molded articles 52 and 62 which are in rectangular shapes when seen in a plan view have been described; in a decorative molded article 121 of a sixth modification, a configuration may be possible in which a margin 123a of a resin film 123 is fixed to a part of a bottom surface 122b in a resin molded article 122 which is in a rectangular shape when seen in a plan view. In this modification, one section of the margin 123a fixed to the bottom surface 122b of the resin molded article 122 along a longitudinal side is eliminated. Note that one section of the margin 123a fixed to the bottom surface 122b of the resin molded article 122 along a width side may be eliminated similarly and, alternatively, one section of the margin 123a fixed to the bottom surface 122b of the resin molded article 122 along the longitudinal side and one section of the margin 123a fixed to the bottom surface 122b of the resin molded article 122 along the width side may be eliminated.

### Industrial Applicability

The present invention relates to a method of manufacturing a decorative molded article and a decorative molded article which is used as an exterior component of various kinds of electronic equipment, such as mobile communication apparatuses, AV equipment, in-vehicle electric equipment and electric appliances. Accordingly, the present invention is applicable to the fields of communications and information equipment, electrical household appliances, in-vehicle electric equipment and the fields relating thereto.

### Reference Signs List

- 1: DECORATIVE MOLDED ARTICLE (RELATED ART EXAMPLE)
- 2: RESIN MOLDED ARTICLE
- 2a: BOTTOM SURFACE
- 3: RESIN FILM
- 3a: BURR
- 4: DECORATIVE MOLDED ARTICLE (RELATED ART EXAMPLE)
- 5: RESIN MOLDED ARTICLE
- 5a: BOTTOM SURFACE
- 6: RESIN FILM
- 7: DECORATIVE MOLDED ARTICLE (RELATED ART EXAMPLE)
- 8: RESIN MOLDED ARTICLE
- 8a: FLANGE
- 9: RESIN FILM
- 10: LOWER CASE
- 11: DECORATIVE MOLDED ARTICLE (FIRST EMBODIMENT)
- 12: RESIN MOLDED ARTICLE
- 12a: OUTER SURFACE
- 12b: BOTTOM SURFACE
- 12c: INNER MOLDED SURFACE
- 13: RESIN FILM
- 13a: MARGINS
- 13b: OVERLAPPING AREAS
- 13c: BENDING LINE
- 13d: SIDE SURFACE
- 13e: NARROWED PORTION
- 14: CLAMP
- 15: HEATER
- 16: COMPRESSION BOX
- 16a: INLET
- 17: MALE DIE
- 17a: TOP PORTION
- 18: CUTTING TOOL
- 19a: FEMALE DIE (DIE WHICH CONSTITUTES A PART OF CAVITY)
- 19b: POSITIVE DIE (DIE WHICH CONSTITUTES ANOTHER PART OF CAVITY)
- 19c: CAVITY SURFACE
- 20: DECORATIVE MOLDED ARTICLE (SECOND MODIFICATION OF FIRST EMBODIMENT)
- 21: DECORATIVE MOLDED ARTICLE (THIRD MODIFICATION OF FIRST EMBODIMENT)
- 22: STEP HEIGHT
- 22a: UPRIGHT WALL
- 23: DECORATIVE MOLDED ARTICLE (FOURTH MODIFICATION OF FIRST EMBODIMENT)
- 24: RESIN FILM
- 24a: MARGINS
- 31: DECORATIVE MOLDED ARTICLE (SECOND EMBODIMENT)
- 32: RESIN MOLDED ARTICLE
- 32a: OUTER SURFACE
- 32b: BOTTOM SURFACE
- 32c: INNER MOLDED SURFACE
- 32d: THROUGH HOLES
- 32d1, 32d2: THROUGH HOLES
- 32e: WALL SURFACE OF HOLE
- 33: RESIN FILM
- 33a, 33f: MARGINS
- 33b: OVERLAPPING AREA
- 33c, 33i: NARROWED PORTION
- 33d, 33e: BENDING LINES
- 33g: SIDE SURFACE
- 33h: VERTICAL WALL SECTIONS
- 34: MALE DIE
- 35a: FEMALE DIE
- 35b: POSITIVE DIE
- 35c, 35d: CAVITY SURFACES
- 41: DECORATIVE MOLDED ARTICLE (THIRD EMBODIMENT)
- 42: RESIN MOLDED ARTICLE
- 43: RESIN FILM
- 43a: BENDING LINE
- 43b: BENT PORTION
- 43c: MARGIN
- 47: MALE DIE
- 47a: TOP PORTION
- 47b: PROJECTION
- 51: DECORATIVE MOLDED ARTICLE (FOURTH EMBODIMENT)
- 52: RESIN MOLDED ARTICLE
- 52a: OUTER MOLDED SURFACE
- 52b: BOTTOM SURFACE
- 52c: INNER MOLDED SURFACE
- 52d: UPRIGHT WALL
- 53: RESIN FILM
- 53a: MARGIN
- 53b: NOTCHES
- 53c: SIDE SURFACE SECTION
- 53d: NARROWED PORTION
- 57: MALE DIE
- 57a: TOP PORTION
- 61: DECORATIVE MOLDED ARTICLE (FIFTH EMBODIMENT)
- 62: RESIN MOLDED ARTICLE
- 62a: OUTER MOLDED SURFACE
- 62b: BOTTOM SURFACE
- 62c: INNER MOLDED SURFACE
- 62d: UPRIGHT WALL
- 63: RESIN FILM
- 63a: MARGINS
- 63b: NOTCHES
- 63c: SIDE SURFACE SECTION
- 63d: NARROWED PORTION
- 63e: BENDING LINE
- 63f: BENT PORTION
- 65: MALE DIE
- 65a: PROJECTION
- 66: RESIN FILM
- 66a: BENDING LINE
- 66b: BENT PORTION
- 66c: MARGIN
- 67: MALE DIE
- 68a: JIG
- 68b: JIG
- 71: DECORATIVE MOLDED ARTICLE (FIRST MODIFICATION COMMON TO FOURTH AND FIFTH EMBODIMENTS)
- 72: RESIN MOLDED ARTICLE
- 73: RESIN FILM
- 73a: MARGIN
- 73b: NOTCHES
- 81: DECORATIVE MOLDED ARTICLE (SECOND MODIFICATION COMMON TO FOURTH AND FIFTH EMBODIMENTS)
- 82: RESIN MOLDED ARTICLE
- 83: RESIN FILM
- 83a: MARGIN
- 83b: NOTCHES
- 91: DECORATIVE MOLDED ARTICLE (THIRD MODIFICATION COMMON TO FOURTH AND FIFTH EMBODIMENTS)
- 92: RESIN MOLDED ARTICLE
- 93: RESIN FILM
- 93a: MARGIN
- 93b: NOTCHES
- 101: DECORATIVE MOLDED ARTICLE (FOURTH MODIFICATION COMMON TO FOURTH AND FIFTH EMBODIMENTS)
- 102: RESIN MOLDED ARTICLE
- 102b: BOTTOM SURFACE
- 103: RESIN FILM
- 103a: MARGIN
- 111: DECORATIVE MOLDED ARTICLE (FIFTH MODIFICATION COMMON TO FOURTH AND FIFTH EMBODIMENTS)
- 112: RESIN MOLDED ARTICLE
- 113: RESIN FILM
- 113a: MARGIN
- 113b: NOTCHES
- 121: DECORATIVE MOLDED ARTICLE (SIXTH MODIFICATION COMMON TO FOURTH AND FIFTH EMBODIMENTS)
- 122: RESIN MOLDED ARTICLE
- 122b: BOTTOM SURFACE
- 123: RESIN FILM
- 123a: MARGIN
- 123b: NOTCHES
- A, A', B, B': ANGLES
- G: INLET

## Claims

1. A method of manufacturing a decorative molded article which includes a visible outer surface and a non-visible inner surface and in which the outer surface is at least partially decorated with a resin film, the method comprising:
a process in which a margin extending from the outer surface toward the inner surface is provided in the resin film;
an insertion process in which the resin film is inserted in a die which constitutes a part of a cavity for molding a resin molded article; and
an integration process in which clamping is performed with a die which constitutes another part of the cavity for forming the resin molded article and the margin is integrated with the resin molded article on an inner surface side as the resin molded article is molded and integrated with the resin film.

2. The method of manufacturing a decorative molded article according to claim 1 wherein:
a bending line formation process in which a bending line is provided at a boundary between the outer surface and the margin is performed before the insertion process; and
the integration process includes a process in which the margin of the resin film is pressed in with a die which constitutes a part of another cavity and is bent along the bending line.

3. The method of manufacturing a decorative molded article according to claim 2 wherein the bending line formation process includes a process in which the resin film is temporarily molded into a shape corresponding to the resin molded article and the margin which is bent along the bending line with respect to the outer surface is provided on a back side of the resin film.

4. The method of manufacturing a decorative molded article according to claim 2 or 3 wherein, in the bending line formation process, a bending angle of the margin along the bending line angle between an outer surface side and the margin is more than 90 degrees and less than 180 degrees.

5. The method of manufacturing a decorative molded article according to any one of claims 2 to 4 wherein, in the integration process in which the margin is bent along the bending line, a contact angle between the die which constitutes a part of the cavity and an end of the margin when they are brought into contact is more than 0 degrees and 85 degrees or less with respect to a cavity surface of the die.

6. The method of manufacturing a decorative molded article according to any one of claims 2 to 5 wherein, when the die which constitutes a part of the cavity and a die which constitutes another cavity are clamped together in the integration process, the outer surface side of the resin film is positioned along the die which constitutes a part of the cavity across the bending line, and the margin which constitutes the inner surface side of the resin film is positioned along the die which constitutes another part of the cavity across the bending line.

7. The method of manufacturing a decorative molded article according to any one of claims 2 to 6 wherein a cylindrical through hole which is directed inside the resin molded article is provided in the resin film and the margin is provided at an end of the through hole.

8. The method of manufacturing a decorative molded article according to claim 1 wherein a notch formation process in which notches for dividing the margin into a plurality of sections is performed before the insertion process.

9. The method of manufacturing a decorative molded article according to claim 8 wherein:
the resin film is inserted with at least a part of the margin protruding from the die which constitutes a part of the cavity for molding the resin molded article in the insertion process; and
the margin of the resin film is pressed in and bent with the die which constitutes another part of the cavity for forming the resin molded article in the integration process.

10. The method of manufacturing a decorative molded article according to claim 8 or 9 wherein a temporary molding process in which the resin film is formed into a shape corresponding to the resin molded article is performed before the notch formation process.

11. The method of manufacturing a decorative molded article according to any one of claims 8 to 10 wherein a bending line formation process in which a bending line is provided at a boundary between the outer surface of the resin film and the margin is performed before the notch formation process.

12. The method of manufacturing a decorative molded article according to claim 11 wherein, at the time of formation of the bending line, a bending angle of the margin along the bending line angle between an outer surface side and the margin is more than 90 degrees and less than 180 degrees.

13. The method of manufacturing a decorative molded article according to any one of claims 8 to 12 wherein, in the integration process, a contact angle between the die which constitutes a part of the cavity and an end of the margin when they are brought into contact is more than 0 degrees and 85 degrees or less with respect to a cavity surface of the die.

14. The method of manufacturing a decorative molded article according to any one of claims 8 to 13 wherein, when the die which constitutes a part of the cavity and a die which constitutes another cavity are clamped together in the integration process, the outer surface side of the resin film is positioned along the die which constitutes a part of the cavity and the margin which constitutes the inner surface side of the resin film is positioned along the die which constitutes another part of the cavity.

15. The method of manufacturing a decorative molded article according to claim 10 wherein the temporary molding process provides a bending line in the resin film at a boundary between the outer surface and the margin.

16. A decorative molded article which includes a visible outer surface and a non-visible inner surface and in which the outer surface is at least partially decorated with a resin film, wherein the resin film includes a margin which extends from an outer surface toward an inner surface and a part of the inner surface is covered with the margin.

17. The decorative molded article according to claim 16 wherein the margin is provided on the entire portion from a boundary between the outer surface and the inner surface to the inner surface.

18. The decorative molded article according to claim 16 or 17 wherein a surface of the margin forms a surface which is substantially flush with the inner surface.

19. The decorative molded article according to claim 16 or 17 wherein the surface of the margin is embedded in the inner surface.

20. The decorative molded article according to any one of claims 16 to 19 further comprising a through hole which penetrates the thickness of the decorative molded article and the margin is provided at an end of the through hole.

21. The decorative molded article according to claim 16 wherein the margin is divided into a plurality of sections by notches.

22. The decorative molded article according to claim 21 wherein the sections of the margin divided by the notches are laminated each other.

23. The decorative molded article according to claim 21 or 22 wherein the margin is provided on the entire portion from a boundary between the outer surface and the inner surface to the inner surface.

24. The decorative molded article according to claim 21 or 22 wherein a surface substantially flush with the inner surface is formed on the surface of the margin.
